# EUROPEAN PATENT SPECIFICATION

(11) **EP 4 499 377 B1**
(45) Date of publication and mention of the grant of the patent: **23.09.2026**
(21) Application number: 23716456.1
(22) Date of filing: 30.03.2023
(51) Int. Cl.: B29B 17/02, C08J 11/08, B29K 67/00

(54) **SEPARATION OF A POLYMER BLEND COMPRISING A POLYESTER BY A SOLVENT-BASED METHOD**
TRENNUNG EINER POLYMERMISCHUNG, DIE EINEN POLYESTER UMFASST, DURCH EIN LÖSUNGSMITTELBASIERTES VERFAHREN
SÉPARATION D'UN MÉLANGE DE POLYMÈRES COMPRENANT UN POLYESTER PAR UN PROCÉDÉ À BASE DE SOLVANT

(30) Priority: 31.03.2022 EP 22166011
(43) Date of publication of application: 05.02.2025
(73) Proprietor: BASF SE, 67056 Ludwigshafen am Rhein (DE)
(72) Inventor: MANGOLD, Hannah Stephanie, 67056 Ludwigshafen am Rhein (DE); WITZEL, Sina, 67056 Ludwigshafen am Rhein (DE); THIEL, Indre, 67056 Ludwigshafen am Rhein (DE); REIN, Christian, 67056 Ludwigshafen am Rhein (DE); STAMMER, Achim, 67056 Ludwigshafen am Rhein (DE)
(74) Representative: BASF IP Association
(86) International application number: PCT/EP2023/058289
(87) International publication number: WO 2023/187053

(56) References cited:
- WO-A1-2022/229129
- US-A1- 2017 218 162
- CHEN WENJUN ET AL: "Biomass-derived [gamma]-valerolactone: efficient dissolution and accelerated alkaline hydrolysis of polyethylene terephthalate", GREEN CHEMISTRY, vol. 23, no. 11, 9 June 2021 (2021-06-09), GB, pages 4065 - 4073, XP055929194, ISSN: 1463-9262, DOI: 10.1039/D1GC00665G
- KANNAN P ET AL: "BRIEF COMMUNICATION Polymer Recovery Through Selective Dissolution of Co-mingled Post- Consumer Waste Plastics", 75 PROGRESS IN RUBBER, PLASTICS AND RECYCLING TECHNOLOGY, 1 January 2017 (2017-01-01), pages 1 - 10, XP055947271, Retrieved from the Internet <URL:https://journals.sagepub.com/doi/pdf/10.1177/147776061703300202> [retrieved on 20220729]
- PAPPA G ET AL: "The selective dissolution/precipitation technique for polymer recycling: a pilot unit application", RESOURCES, CONSERVATION AND RECYCLING, ELSEVIER, AMSTERDAM, NL, vol. 34, no. 1, 1 December 2001 (2001-12-01), pages 33 - 44, XP004311746, ISSN: 0921-3449, DOI: 10.1016/S0921-3449(01)00092-1

## Description

The invention relates to a method for separating a polymer blend, which comprises i) a polyester and ii) one or more component(s) selected from the group consisting of a second polymer, a third polymer and a filler, wherein second polymer and third polymer are different from each other and different from the polyester of i).

The demand for polymeric materials has drastically increased over the last decades. However, the poor biodegradability has led to large amounts of plastic waste which is in Europe usually incinerated thereby losing valuable materials and generating huge CO₂ emissions. Even worse is landfill due to the poor biodegradability. Polymeric materials have been used extensively in the packaging sector, for example, in beverage packaging or food packaging. The vast majority of food and drink today is packaged within plastic bottles and containers, made from, for example, polymeric materials comprising polyethylene terephthalate (PET). PET is also a main component of clothing nowadays. As these materials typically have poor biodegradability and are also still valuable products, it is desirable for these plastics to be recovered and recycled. The same applies for polymer blends comprising, for example, polybutylene terephthalate (PBT), which are normally used in the electronic field, for example, as insulating sheath in cable applications.

Although recycling processes have been adopted to convert these waste materials into new production materials, there are still many problems associated with recycling and recovery of polymeric materials. Recycling of polyester, especially polyethylene terephthalate (PET), containing textiles is difficult due to mixture with other polymers, cotton, colorants etc. Therefore, a closed-loop mechanical recycling process is not possible without separation from other materials. Also, for other PET end-of-life sources, often mechanical recycling is hindered by contaminants and mixed polymer waste streams. The same problems exist for polymer blends with other polyesters, especially polybutylene terephthalate (PBT).

An approach for recovery of polymeric materials includes the dissolving of the polymeric material. WO 2016/12755 A1 discloses an extraction of polyesters from packaging, wherein a first solvent is used for removal of colorants and a second solvent is used to dissolve the polyester. Chen et al. (Wenjun Chen, Yuechao Yang, Xue Lan, Baolong Zhang, Xiaogang Zhang and Tiancheng Mu in Green Chem., 2021, 23, 4065 -4073) describe a process for dissolution and accelerated alkaline hydrolysis of PET. US 2017/218162 A1 discloses process for extracting polyester from packaging containing one or more dyes. WO 2022/229129 A1, which is a prior art document under Art. 54(3) EPC, describes a process for providing a solid polyester fraction from a textile product comprising natural fibers, and polyester fibers. However, these methods are limited in application, especially when it comes to recovery of polyesters from polymer blends comprising the respective polyester only as one component among a plurality of other materials.

The object underlying the present invention was thus the provision of an improved process, which enables a simple separation of polyesters from other materials comprised in a polymer blend, which also enables high recovery rates of the polyester while not harming the relevant properties of the polymeric material such as its number average weight Mn, and which uses a non-hazardous solvent.

### method for separating a polymer blend

The invention relates to a method for separating a polymer blend, which comprises
i) a polyester and
ii) one or more components) selected from the group consisting of a second polymer, a third polymer and a filler, wherein second polymer and third polymer are different from each other and different from the polyester of i);
the method comprising:
a) providing the polymer blend and providing a solvent comprising gamma-valerolactone;
b) contacting the polymer blend with the solvent comprising gamma-valerolactone at a temperature T1 of < 170 °C, thereby obtaining a solvent, which is enriched in dissolved second polymer and a residue of the polymer blend, which is depleted of said second polymer and comprises the polyester, optionally the third polymer and optionally the filler;
   and
c) optionally contacting the residue of the polymer blend obtained in b.2) with a solvent comprising gamma-valerolactone at a temperature T2 of > 170 °C, thereby obtaining a solvent, which is enriched in dissolved polyester compared to the solvent provided in a) and comprises optionally at least a part of the filler, and optionally a residue of the polymer blend, which is depleted of polyester and comprises optionally the third polymer and optionally the filler or a part of the filler;
wherein b) comprises:
b.1) contacting the polymer blend with the solvent comprising gamma-valerolactone at a temperature T1 of < 170 °C, thereby obtaining a solvent, which is enriched in dissolved second polymer and a residue of the polymer blend, which is depleted of said second polymer and comprises the polyester, optionally the third polymer and optionally the filler;
b.2) separating the solvent, which is enriched in dissolved second polymer and the residue of the polymer blend obtained in b.1), preferably by a physical separation method, thereby obtaining a separated solvent, which is enriched in dissolved second polymer compared to the solvent provided in a) and the residue of the polymer blend, which is depleted of said second polymer and comprises the polyester.

Gamma-valerolactone (C₅H₈O₂; IUPAC: 5-methyloxolan-2-one, abbreviation: GVL) is obtainable from carbohydrate-based biomasses, for example, it is readily obtained from sugar, and is thus a "green" solvent. It had so far only been described at the outmost as being able to dissolve single polymeric materials. It has now been surprisingly found, that using a solvent comprising GVL in the above-described method for separation of a polymer blend comprising polyester resulted in recovery of the polyester in good yields and purities. Furthermore, not only a stop of decrease regarding the Mass average molecular weight Mw of the polyester, which is recovered from the polymer blend, could be achieved but also the number average molecular weight Mn increased. Fillers, if present, could effectively be removed and also a decrease of intrinsic viscosity could be avoided.

A "polymer blend" means a combination of at least one polymer with at least one further component, which is either another polymer or a filler, these components combined with each other in any suitable way. For example, in case of at least two polymers, the polymers are intermixed, or one or more polymer(s) are embedded in one or more other polymer(s), or the polymers are aligned in separate layers, as well as hybrid forms of these combinations. For example, a polymer blend is a textile, which comprises polyethylene terephthalate (PET) and spandex and/or polyamide (PA) and/or a natural polymer such as cotton and/or a polymer such as viscose. Another example of a polymer blend is a composite, wherein a filler such as glass fiber is embedded in polybutylene terephthalate (PBT). "Polymer" means natural and synthetic polymers, wherein natural polymers are, for example, cotton, cellulose, and lignin. Synthetic polymers are, for example, polyolefins such as polyethylene and polypropylene, polyester, polyurethane, polyamide, polyethylene glycol, polyethers, such as polytetrahydrofuran, and viscose. A "filler" is, for example, glass fiber, coal fiber, carbon black, inorganic salt (for example, talc, disodium carbonate), adhesive, thickener, antifoam agent, finishing agent (for example water/oil/stain repellent, flame retardant, anticrease agent, biocide), binder, surfactant (for example, softener, scouring agent, antistatic agent), desizing agent, bleaching agent, oxidant, UV filter, emulsionant, fixing agent, washing dispersant, profiling agent. These components are known to the skilled person.

"Contacting" in step b) preferably means that the polymer blend is at least partially immersed in the solvent. Preferably, the polymer blend is at least partially immersed in the solvent in that at least 60 %, more preferably at least 70 %, more preferably at least 80 %, more preferably at least 90 %, more preferably at least 95 %, more preferably at least 99 % of the polymer blend surface are in contact with the solvent, based on the total surface of the polymer blend being 100%. The same applies for the "contacting" in step c), i.e. the polymer blend provided in a) or the residue of the polymer blend obtained in b) is at least partially immersed in the solvent. Preferably, the polymer blend provided in a) or the residue of the polymer blend obtained in b) is at least partially immersed in the solvent in that at least 60 %, more preferably at least 70 %, more preferably at least 80 %, more preferably at least 90 %, more preferably at least 95 %, more preferably at least 99 % of the surface of the polymer blend provided in a) or of the surface of the residue of the polymer blend obtained in b) are in contact with the solvent, based on the total surface of the respective polymer blend being 100%.

Generally, no specific restrictions exist regarding the conditions under which the contacting in b) and/or c) takes place provided that an efficient dissolution of the respective polymer takes place.

In step b), the second polymer, which is preferably Spandex, is, presumably not only dissolved, but furthermore at least partially degraded - this is apparent from, for example, Differential Scanning Calorimetry (DSC) measurements. "Spandex" is preferably a copolymer of polyurethane and polyethylene glycol and/or polytetrahydrofurane, more preferably Spandex is a copolymer of polyurethane and polyethylene glycol or a copolymer of polyurethane with polytetrahydrofurane.

Step b) does not only result in a depletion of second polymer but also results in the residue of the polymer blend, which is depleted of said second polymer and comprises the polyester, optionally the third polymer and optionally the filler, being depleted of colorants or parts thereof in case that a colored polyester is used. Also step c), especially seen in combination with step d) as described below, results in a polyester being depleted of colorants in case that a colored polyester is used. "Depleted in colorant" can be determined based on quantitative L*a*b* values but may also, except for optical brighteners, be identified visually by the eye: The polymer blend provided in a) has a color, wherein the residue of the polymer blend obtained in b) and/or the precipitated polyester in d) is lighter and whiter respectively. "Color" comprises chromatic and achromatic colors (white, grey, black). This applies especially for all colorants not being optical brighteners. Depleted in colorant means, especially with respect to optical brighteners being the colorant, that the intensity of emitted fluorescence radiation (emission), preferably in the range of from 400 to 600 nm, is reduced for the residue of the polymer blend obtained in b) and/or the precipitated polyester in d) when irradiated with light with a wavelength in the range of from 250 to 400 nm compared to the intensity of emitted fluorescence radiation (emission), preferably in the range of from 400-600 nm, of the polymer blend provided in a). Methods for determination of the intensity of emitted fluorescence radiation are known to the skilled person, for example, the determination can be made visually by using an UV lamp, by fluorescence determination or determination of quantum yield.

Regarding L*a*b* values, "depleted in colorant", regardless whether the colorant is visible to the human eye or is an optical brightener, means that
the absolute value of a* changes, preferably by at least 0.2; and/or, preferably and,
the absolute value of b* changes, preferably by at least 0.2; and/or, preferably and,
the L* value increases, preferably by at least 4,
each compared to the L*a*b* values of the colored polymer blend provided in a), wherein L*a*b* values are determined according to DIN 5033 and DIN EN ISO 11664-1.6.

In some preferred embodiments, the colorant is selected from the group consisting of dye and optical brightener and mixtures of dye and optical brightener. A "colorant" is a substance that cause the change of color impression of material. This comprises dyes, which absorb wavelength intervals of visible light (400 to 780 nm) and optical brighteners, which amplify the light emission of a material through UV light adsorption and emittance of visible light (through fluorescence), i.e. an optical brightener converts radiation that is not visible to the human eye (<400nm) into visible fluorescence radiation of the blue-red spectral range (400 to 600 nm). Colorants usable or used for changing the color impression of polymeric materials are known to the skilled person. In the context of the present invention, the term "dye" means any kind of dye such as dye, pigment, dispersion, wherein a dye is, for example, one or more selected from the group consisting of acid dye, basic dye, direct dye, disperse dye, azoic dye, food dye, solvent dye, organic dye, inorganic dye, organic pigment, inorganic pigment, disperse ink, reactive ink, oxidation dye, reactive dye, sulfur dye, mordant dye and vat dye. The term "optical brightener" comprises optical brightening agents, fluorescent brightening agents, and fluorescent whitening agents.

Overviews of colorants for polymeric materials can be found, for example, in "Dyes and Pigments" Metin Agikyildiz, Kübra Günes, Ahmet Gürses Springer, 2016 (ISBN: 10 : 3319338900); Industrial Organic Pigments - Klaus Hunger, Thomas Heber, Martin U. Schmidt, Friedrich Reisinger, Stefan Wanne Wiley-VCH, 4th edition, 2018 (ISBN: 978-3-527-32608-2); Chemistry and Technology of Natural and Synthetic Dyes and Pigments - Ashis Kumar Samanta, Nasser Awwad, IntechOpen, 2020 (ISBN: 9781789859980, 9781789859973, 9781839687587); Encyclopedia of Color, Dyes, Pigments - Volume 1, Gerhard Pfaff, de Gruyter, 2021 (ISBN: 311058588X); Heinrich Zollinger: Color Chemistry: Syntheses, Properties, and Applications of Organic Dyes and Pigments. 3rd edition. WILEY-VCH Verlag, Weinheim 2003 (ISBN: 3-906390-23-3); Klaus Hunger (Ed.): Industrial Dyes: Chemistry, Properties, Applications. WILEY-VCH Verlag, Weinheim 2003 (ISBN: 3-662-01950-7); Hermann Rath: Lehrbuch der Textilchemie. einschl. der textilchemischen Technologie. 2nd edition. Springer-Verlag, Berlin, Heidelberg 1963 (ISBN: 978-3-662-00065-6); Wilfried Kratzert, Rasmus Peichert: Farbstoffe. Quelle & Meyer, Heidelberg 1981 (ISBN: 3-494-01021-8); Ullmann's Encyclopedia of industrial chemistry, Wiley-VCH, 2000, sections "dyes and pigments" and "dyes, general survey" (ISBN: 9783527303854).

As indicated herein above, step b) of the method for separating a polymer blend comprises:
b.1) contacting the polymer blend with the solvent comprising gamma-valerolactone at a temperature T1 of < 170 °C, thereby obtaining a solvent, which is enriched in dissolved second polymer and a residue of the polymer blend, which is depleted of said second polymer and comprises the polyester, optionally the third polymer and optionally the filler;
b.2) separating the solvent, which is enriched in dissolved second polymer and the residue of the polymer blend obtained in b.1), preferably by a physical separation method, thereby obtaining a separated solvent, which is enriched in dissolved second polymer compared to the solvent provided in a) and the residue of the polymer blend, which is depleted of said second polymer and comprises the polyester.

The separation in b.2) is done by methods and means known to the skilled person, especially solid-liquid separation methods such as filtration, for example, heated pressure filtration, sedimentation or centrifugation see Handbuch der mechanischen Fest-Flüssig-Trennung Taschenbuch - 29. April 2004 von Klaus Luckert (Herausgeber)). Colorants, if present in the polymer blend, especially in the polyester, remain at least partially in the separated solvent obtained in b.2).

In some preferred embodiments of the method for separating a polymer blend, c) comprises:
c.1) contacting the polymer blend provided in a) or the residue of the polymer blend obtained in b) or b.2) with a solvent comprising gamma-valerolactone and having a temperature T1a, which is ≤ T2 (T2 being a temperature of > 170 °C), thereby obtaining a mixture comprising the polymer blend and the solvent;
c.2) heating the mixture obtained in c.1) to a temperature T2 of > 170 °C with continuous heating, wherein the heating from T1a to T2 is preferably done with a heating rate in the range of from 20 K/h to 1000 K/h, 25 K/h to 900 K/h, 30 K/h to 800 K/h, 40 K/h to 700 K/h, 60 K/h to 600 K/h, and preferably maintaining T2, thereby obtaining a solvent, which is enriched in dissolved polyester compared to the solvent provided in a) and which optionally comprises at least a part of the filler; and optionally a residue of the polymer blend, which is depleted of polyester and comprises the third polymer and optionally the filler or a part of the filler;
c.3) separating the solvent, which is enriched in dissolved polyester obtained in c.2) from the residue of the polymer blend, wherein the separation is preferably done by heated filtration, more preferably by heated filtration at a temperature T3 in the range of from T2 minus 20 °C to T2 plus 20 °C (T3 = T2 ± 20°C), more preferably at a temperature T3 in the range of from T2 minus 10 °C to T2 plus 10 °C (T3 = T2 ± 10°C).

The expressions "(optionally) at least a part of the filler" and "(optionally) the filler or a part of the filler" in c.2) mean that, if a filler is present in the polymer blend provided in a), which is soluble in a solvent comprising gamma-valerolactone at a temperature T2, said soluble filler is also dissolved in the solvent, which is enriched in dissolved polyester obtained in c.2). In case that not only) a soluble filler is present in the polymer blend provided in a) but (also) a filler, which is not soluble in a solvent comprising gamma-valerolactone at a temperature T2, said insoluble filler remains in the residue of the polymer blend, which is depleted of polyester and comprises optionally the third polymer. In cases where the polymer blend provided in a) comprises only fillers) soluble in in a solvent comprising gamma-valerolactone at a temperature T2, no filler remains in the residue of the polymer blend. In cases where only filler(s) insoluble in in a solvent comprising gamma-valerolactone at a temperature T2 are contained in the polymer blend provided in a), all filler(s) remain(s) in the residue of the polymer blend. In cases where the polymer blend provided in a) comprises filler(s) insoluble in in a solvent comprising gamma-valerolactone at a temperature T2 and filler(s) soluble in in a solvent comprising gamma-valerolactone at a temperature T2, at least a part of the filler, i.e. the soluble filler(s) is/are comprised in the solvent, which is enriched in dissolved polyester obtained in c.2) and the residue of the polymer blend, which is depleted of polyester and optionally comprises the third polymer comprises a part of the filler, i.e. the insoluble filler(s).

In heated filtration, the solution, filter, and funnel are heated, preferably heated so that each has temperature T3. Other means and methods for the separation in c.3) are known to the skilled person such as non-heated filtration. In some embodiments, it is preferred that the heated filtration is done under a pressure of ≥1bar, more preferably at a pressure in the range of from 1 bar to 30 bar, preferably in the range of from 1 to 10 bar, more preferably in the range of from 1 to 6 bar (heated pressure filtration).

The temperature T1a indicated in c.1) and c.2), is the temperature, which the solvent comprising gamma-valerolactone used in c.1) has. T1a is either the same temperature as T2, i.e. T1a is > 170°C, or T1a is a temperature < T2, for example T1a is a temperature below 120 °C or T1a is a temperature in the range of 120 °C to < T2, preferably in the range of > 120 °C to < T2. If T1a is T2, the heating in step c.2) with a continuous heating means that the heating is adjusted to that T2 is maintained, preferably the heating is adjusted so that the temperature does not exceed T2 by more than 10 °C.

In some preferred embodiments, the residue of the polymer blend obtained in c.3) comprises still a remaining amount of the polyester. Thus, it is preferred that in a step c.4) said residue of the polymer blend obtained in c.3) comprising remaining amount of the polyester is brought into contact with solvent comprising gamma-valerolactone, preferably at a temperature T3 as defined above, followed by filtration, preferably heated filtration at a temperature T3 as defined above, thereby obtaining a residue of the polymer blend, which is further depleted of polyester and comprises the third polymer and optionally the filler or a part of the filler; and a solvent, which contains the remaining amount of the polyester. Preferably, the contacting in c.4) is done in that, especially in cases where heated filtration is used in c.3), the residue of the polymer blend obtained in c.3) remains on the filter and is there brought into contact with solvent comprising gamma-valerolactone, wherein the solvent, which contains the remaining amount of the polyester obtained in c.4), is separated thereof due to filtration. In some preferred embodiments, the solvent, which contains the remaining amount of the polyester obtained in c.4) is combined with the solvent, which is enriched in dissolved polyester, obtained in c.3). In some preferred embodiments, where further steps d) and/or e) and/or f) and/or g) as described below in more detail are conducted, the precipitated polyester amounts finally obtained from the solvent, which contains the remaining amount of the polyester obtained in c.4) and from the solvent, which is enriched in dissolved polyester, obtained in c.3), are combined.

In some preferred embodiments of the method for separating a polymer blend, if T1a is below 120°C, the heating is done with a continuous heating, preferably with a heating rate in the range of from 20 K/h to 1000 K/h, 25 /K/h to 900 K/h, 30 k/h to 800 K/h, 40 k/h to 700 K/h, 60 k/h to 600 K/h, preferably the heating is done so that the mixture obtained in c.1) is in the temperature range of 110-130 °C for less than 60 minutes, preferably for less than 50 minutes, more preferably for less than 40 minutes, more preferably for less than 30 minutes, more preferably for less than 20 minutes, or, if T1a is above 120°C, the heating is done with a continuous heating, preferably with a heating rate in the range of from 0.1 to 1000 K/h, more preferably in the range of from 5 to 500 K/h, more preferably in the range of from 25 to 300 K/h.

In some preferred embodiments, the method for separating a polymer blend comprises:
d) cooling the solvent obtained in c) or c.3), which is enriched in dissolved polyester compared to the solvent provided in a) and which optionally comprises at least a part of the filler, to a temperature below 170°C, preferably below 150°C, more preferably below 140°C, more preferably below 100°C, thereby obtaining a precipitated polyester and a solvent, which is depleted in dissolved polyester and which optionally comprises at least a part of the filler.

The solvent obtained in c) or c.2) or c.3), which is enriched in dissolved polyester compared to the solvent provided in a) and which optionally comprises at least a part of the filler, is preferably cooled in d) without addition of anti-solvents, i.e. the solvent obtained in c) or c.2) or c.3) is cooled as it is obtained. Cooling is done by any suitable method, for example, by letting the solvent obtained in c) or c.2) or c.3) stand under ambient conditions (1013 mbar and room temperature 20-25 °C) or by applying cooling means such as slow cooling in crystallizer, preferably with a cooling rate in the range of from 3 to 25 K/h, in some preferred embodiments with a cooling rate in the range of from 3 to 60 K/h, dripping into GVL, which has a temperature below 30 °C, fast cooling, preferably with a cooling rate > 100 K/h, etc. An "antisolvent" is a solvent having a solubility regarding the polyester < 1g/kg at a temperature in the range of from 20 to 25 °C. In some alternative embodiments, the solvent obtained in c) or c.2) or c.3), which is enriched in dissolved polyester compared to the solvent provided in a) and which optionally comprises at least a part of the filler, is preferably cooled in d) with addition of one or more anti-solvent(s).

In some preferred embodiments, the method for separating a polymer blend comprises:
e) separating the precipitated polyester obtained in d) from the solvent, which is depleted in dissolved polyester, thereby obtaining a precipitated polyester and the solvent, which is depleted in dissolved polyester and which optionally comprises at least a part of the filler.

In some preferred embodiments, the method for separating a polymer blend comprises:
f) optionally washing the precipitated polyester obtained in e);
g) optionally drying the precipitated polyester obtained in e) or the washed precipitated polyester obtained in f).

Washing in optional step f) is preferably done with a solvent selected from the group consisting of methanol, ethanol, propanol, isopropanol, acetonitrile, ethyl acetate, acetone, water or a mixture of two or more of these solvents. In some embodiments, the washing in optional step f) is done with a solvent selected from the group consisting of methanol, ethanol, propanol, isopropanol, acetonitrile, ethyl acetate, acetone, water, GVL, or a mixture of two or more of these solvents. Drying in step g) is preferably done under one or more conditions selected from the group consisting of a pressure in the range of from 1 to 1013 mbar; a temperature in the range of from 50 to 210 °C, preferably in the range of from 60 to 180°C, more preferably in the range of from 80 to 150 °C; drying time in the range of from 30 minutes to 24 hours; drying in an atmosphere comprising nitrogen, preferably in an atmosphere having at least 90 volume-%, more preferably 95 volume-%, more preferably at least 98 volume-% nitrogen. Drying is done by one or more methods selected from the group consisting of contact drying, convection drying and radiation drying.

The precipitated polyester obtained in d), e), f) and/or g) is preferably less colored than the polymer blend provided in a), more preferably the precipitated polyester is colorless. The precipitated polyester has preferably a higher number average molecular weight Mn than the polyester comprised in the polymer blend and a similar mass weight average molecular weight Mw as the polyester comprised in the polymer blend, i.e. a mass weight average molecular weight Mw which deviates from the Mw of the polyester comprised in the polymer blend by at minimum - 5 weight-% and at maximum +20 weight-%, based on the Mw of the polyester comprised in the polymer blend being 100 weight-%. Colorants, if present in the polymer blend, especially in the polyester, remain at least partially in the solvent, which is depleted in dissolved polyester, obtained in e).

In some preferred embodiments, the method for separating a polymer blend comprises recycling the separated solvent obtained in b.2) and/or the separated solvent obtained in e) at least partially to b) and/or c), optionally after one or more work-up step(s). The one or more work-up step(s) are conducted in order to achieve a suitable purity of the solvent for re-use. For example, colorants and/or filler, if present, are separated from the solvent, preferably by a physical separation method, more preferably by distillation.

In some preferred embodiments of the method for separating a polymer blend, T1 is a temperature in the range of from 110 to < 170°C, preferably a temperature in the range of from 110 to 165 °C, more preferably a temperature in the range of from 120 to 150 °C. In some preferred embodiments of the method for separating a polymer blend, T2 is a temperature in the range of from > 170°C to 200 °C, preferably a temperature in the range of from 175 to 190 °C, more preferably a temperature in the range of from 180 to 190 °C. Especially T2 is a temperature in the respective range, i.e. in some embodiments, a constant temperature T2 is maintained, i.e. in these embodiments "maintaining T2" also means that about one temperature is kept. In some embodiments, the temperature is varied in the range of T2 during step c) or during the maintaining of T2 in step c.2) respectively.

In some preferred embodiments of the method for separating a polymer blend, a), b) c) and optionally d) are done at a pressure in the range of from 800 to 200,000 hPa.

In some preferred embodiments of the method for separating a polymer blend, the polyester according to i) is based on at least one polyhydric alcohol and at least one organic dicarboxylic acid. The at least one polyhydric alcohol of the polyester of i) is preferably at least one diol having from 2 to 12 carbon atoms, more preferably from 2 to 6 carbon atoms, more preferably, the at least one polyhydric alcohol comprises at least 1,4-butanediol or 1,2-ethanediol. The at least one organic dicarboxylic acid of the polyester of i) is preferably selected from the group consisting of terephthalic acid, adipic acid, 2,5-furandicarboxylic acid and mixture of two or more of these dicarboxylic acids. In some preferred embodiments of the method for separating a polymer blend, the polyester according to i) is based on 1,4-butanediol or 1,2-ethandiol, more preferably the polyester according to i) is selected from the group consisting of a polymer based on 1,4-butanediol and terephthalic acid (polybutylene terephthalate, PBT), a polymer based on 1,2-ethanediol and terephthalic acid (polyethylene terephthalate, PET), a copolymer of 1,4-butanediol, adipic acid and terephthalic acid (polybutylenadipat-terephthalat, PBAT), a polymer of 1,2-ethanediol and 2,5-furandicarboxylic acid (polyethylene furanoate, PEF) and mixtures of two or more of these (co)polymers. In some preferred embodiments, the polyester comprises at least PET or PBT.

In some preferred embodiments of the method for separating a polymer blend, the second polymer is preferably selected from the group consisting of polyurethane (PU), polyethylene glycol (PEG), polytetrahydrofuran (pTHF), mixtures of these polymers and copolymers of these polymers, wherein the second polymer is more preferably a copolymer of PU and PEG and/or pTHF, more preferably spandex (copolymer of PU and PEG or of PU and pTHF).

In some preferred embodiments of the method for separating a polymer blend, the third polymer is preferably selected from the group consisting of polyolefins, preferably polyethylene (PE) and polypropylene (PP), polyamide (PA), and viscose, natural polymer, preferably wool or cotton , mixtures of two or more of these polymers and copolymers of two or more of these polymers, wherein the third polymer is preferably selected from PA, wool, cotton, viscose and mixtures of two or more of these polymers. In some embodiments, there are one or more third polymers, which are present in the polymer blend. Preferably, there are at least two third polymers selected from PA, wool, cotton, viscose, more preferably mixtures of PA with at least one of wool, cotton and viscose. More preferably, there are two third polymers, which are preferably PA and cotton or viscose.

In some preferred embodiments of the method for separating a polymer blend, the filler is selected from the group consisting of glass fiber, coal fiber, carbon black, inorganic salts (for example, talc, disodium carbonate), adhesive, thickener, antifoam agent, finishing agent (for example water/oil/stain repellent, flame retardant, anticrease agent, biocide), binder, surfactant (for example, softener, scouring agent, antistatic agent), desizing agent, bleaching agent, oxidant, UV filter, emulsionant, fixing agent, washing dispersant, profiling agent. In embodiments, where the polyester is PBT, the filler is one or more selected from the group consisting of glass fiber, coal fiber, carbon black, inorganic salts (for example, talc, disodium carbonate), adhesive, thickener, antifoam agent, finishing agent (for example water/oil/stain repellent, flame retardant, anticrease agent, biocide), binder, surfactant (for example, softener, scouring agent, antistatic agent), desizing agent, bleaching agent, oxidant, UV filter, emulsionant, fixing agent, washing dispersant, profiling agent, preferably the filler is one or more selected from glass fiber, coal fiber, carbon black, inorganic salts (for example, talc, Na2CO3). In embodiments where the polyester is PET, the filler is one or more selected from the group consisting of glass fiber, coal fiber, carbon black, inorganic salts (for example, talc, disodium carbonate), adhesive, thickener, antifoam agent, finishing agent (for example water/oil/stain repellent, flame retardant, anticrease agent, biocide), binder, surfactant (for example, softener, scouring agent, antistatic agent), desizing agent, bleaching agent, oxidant, UV filter, emulsionant, fixing agent, washing dispersant, profiling agent, preferably the filler one or more selected from adhesive, thickener, antifoam agent, finishing agent (for example water/oil/stain repellent, flame retardant, anticrease agent, biocide), binder, surfactant (for example, softener, scouring agent, antistatic agent), desizing agent, bleaching agent, oxidant, UV filter, emulsionant, fixing agent, washing dispersant, profiling agent.

In some preferred embodiments of the method for separating a polymer blend, the contacting in b) or b.1) is done for a period of time of at least 5 minutes, preferably in the range of from 5 minutes to 10 hours, more preferably in the range of from 5 minutes to 5 hours, more preferably in the range of from 5 minutes to 4 hours.

In some preferred embodiments of the method for separating a polymer blend, the contacting in c) or the maintaining of T2 in c.2) is done for a period of time of at least 0.1 hours, preferably in the range of from 1 minute to 10 hours, more preferably in the range of from 1 minute to 2 hours, more preferably in the range of from 5 minutes to 1 hour, more preferably in the range of from 5 to 30 minutes. As indicated above, T2 is a temperature in the respective range, i.e. in some embodiments, a constant temperature T2 is maintained, i.e. in these embodiments "maintaining T2" also means that about one temperature is kept. In some embodiments, the temperature is varied in the range of T2 during step c) or during the maintaining of T2 in step c.2) respectively.

### Polyester + Spandex + optionally Filler

In some preferred embodiments of the method for separating a polymer blend, wherein the polymer blend comprises, preferably consists of polyester, second polymer, optionally filler, with optionally one or more colorants, the method comprising:
a) providing the polymer blend and providing a solvent comprising gamma-valerolactone;
b) contacting the polymer blend with the solvent comprising gamma-valerolactone at a temperature T1 of < 170 °C, thereby obtaining a solvent, which is enriched in dissolved second polymer and a residue of the polymer blend, which is depleted of said second polymer and comprises the polyester, and optionally the filler;
wherein b) comprises:
b.1) contacting the polymer blend with the solvent comprising gamma-valerolactone at a temperature T1 of < 170 °C, thereby obtaining a solvent, which is enriched in dissolved second polymer and a residue of the polymer blend, which is depleted of said second polymer and comprises the polyester, optionally the third polymer and optionally the filler;
b.2) separating the solvent, which is enriched in dissolved second polymer and the residue of the polymer blend obtained in b.1), preferably by a physical separation method, thereby obtaining a separated solvent, which is enriched in dissolved second polymer compared to the solvent provided in a) and the residue of the polymer blend, which is depleted of said second polymer and comprises the polyester.

The method comprising steps a) and b) in this context means that there may be a step c) after b), which is used if a filler is present in the polymer blend to separate the polyester from the filler. Preferably, the method in this embodiment consists of steps a) and b), optionally with b) being a combination of b.1) and b.2) as described above and optionally with follow-up steps such as c), more preferably c.1), c.2), c.3), d) and/or e) and/or f) and/or g) and/or an at least partially recycling of solvent to b) and/or c).

In some preferred embodiments of the method for separating a polymer blend, the polymer blend comprises, preferably consists of polyester, second polymer, optionally filler, with optionally one or more colorants, the method comprising:
a) providing the polymer blend and providing a solvent comprising gamma-valerolactone;
b) contacting the polymer blend with the solvent comprising gamma-valerolactone at a temperature T1 of < 170 °C, thereby obtaining a solvent, which is enriched in dissolved second polymer and a residue of the polymer blend, which is depleted of said second polymer and comprises the polyester, and optionally the filler;
wherein b) comprises:
b.1) contacting the polymer blend with the solvent comprising gamma-valerolactone at a temperature T1 of < 170 °C, thereby obtaining a solvent, which is enriched in dissolved second polymer and a residue of the polymer blend, which is depleted of said second polymer and comprises the polyester, optionally the third polymer and optionally the filler;
b.2) separating the solvent, which is enriched in dissolved second polymer and the residue of the polymer blend obtained in b.1), preferably by a physical separation method, thereby obtaining a separated solvent, which is enriched in dissolved second polymer compared to the solvent provided in a) and the residue of the polymer blend, which is depleted of said second polymer and comprises the polyester;
c.1) contacting the residue of the polymer blend obtained in b.2) with a solvent comprising gamma-valerolactone and having a temperature T1a, which is ≤ T2 (T2 being a temperature of > 170°C), thereby obtaining a mixture comprising the polymer blend and the solvent;
c.2) heating the mixture obtained in c.1) to a temperature T2 of > 170 °C with a continuous heating, wherein the heating from T1a to T2 is preferably done with a heating rate in the range of from 20 K/h to 1000 K/h, 25 /K/h to 900 K/h, 30 k/h to 800 K/h, 40 k/h to 700 K/h, 60 k/h to 600 K/h, preferably maintaining T2, thereby obtaining a solvent, which is enriched in dissolved polyester compared to the solvent provided in a) and which optionally comprises at least a part of the filler; and optionally a residue of the polymer blend, which is depleted of polyester and comprises the third polymer and optionally the filler or a part of the filler;
c.3) optionally separating the solvent, which is enriched in dissolved polyester obtained in c.2) from the residue of the polymer blend, wherein the separation is preferably done by heated filtration, more preferably by heated filtration at a temperature T3 in the range of from T2 minus 20 °C to T2 plus 20 °C T3 = T2±20 °C), more preferably at a temperature T3 in the range of from T2 minus 10 °C to T2 plus 10 °C (T3 = T2±10 °C);
d) optionally cooling the solvent obtained in c.3), which is enriched in dissolved polyester compared to the solvent provided in a) and which optionally comprises at least a part of the filler, to a temperature below 170°C, preferably below 150°C, more preferably below 140°C, more preferably below 100°C, thereby obtaining a precipitated polyester and a solvent, which is depleted in dissolved polyester and optionally comprises at least a part of the filler;
e) optionally separating the precipitated polyester obtained in d) from the solvent, which is depleted in dissolved polyester and which optionally comprises at least a part of the filler, thereby obtaining a precipitated polyester and the solvent, which is depleted in dissolved polyester and which optionally comprises at least a part of the filler.

As indicated above, step b) and also step c), especially seen in combination with step d) as described above, results in a polyester being depleted of colorants in case that a colored polyester is used. The colorants) can be found in the solvent, which is enriched in dissolved second polymer obtained in b) and/or in the solvent, which is enriched in dissolved polyester obtained in c.2) and, after precipitation in d), remain in the solvent, which is depleted in dissolved polyester and which optionally comprises at least a part of the filler as obtained in e). In some preferred embodiments, the residue of the polymer blend obtained in c.3) comprises still a remaining amount of the polyester. Thus, it is preferred that in a step c.4) said residue of the polymer blend obtained in c.3) comprising remaining amount of the polyester, is brought into contact with solvent comprising gamma-valerolactone, preferably at a temperature T3 as defined above, followed by filtration, preferably heated filtration at a temperature T3 as defined above, thereby obtaining a residue of the polymer blend, which is further depleted of polyester and comprises the third polymer and optionally the filler or a part of the filler; and a solvent, which contains the remaining amount of the polyester. Preferably, the contacting in c.4) is done in that, especially in cases where heated filtration is used in c.3), the residue of the polymer blend obtained in c.3) remains on the filter and is there brought into contact with solvent comprising gamma-valerolactone, wherein the solvent, which contains the remaining amount of the polyester obtained in c.4), is separated thereof due to filtration. In some preferred embodiments, the solvent, which contains the remaining amount of the polyester obtained in c.4) is combined with the solvent, which is enriched in dissolved polyester, obtained in c.3). In some preferred embodiments, where further steps d) and/or e) and/or f) and/or g) as described above are conducted, the precipitated polyester amounts finally obtained from the solvent, which contains the remaining amount of the polyester obtained in c.4) and from the solvent, which is enriched in dissolved polyester, obtained in c.3), are combined.

In some preferred embodiments, the method for separating a polymer blend comprises:
f) optionally washing the precipitated polyester obtained in e);
g) optionally drying the precipitated polyester obtained in e) or the washed precipitated polyester obtained in f).

Washing in optional step f) is preferably done with a solvent selected from the group consisting of methanol, ethanol, propanol, isopropanol, acetonitrile, ethyl acetate, acetone, water or a mixture of two or more of these solvents. In some embodiments, washing in optional step f) is preferably done with a solvent selected from the group consisting of methanol, ethanol, propanol, isopropanol, acetonitrile, ethyl acetate, acetone, water, GVL or a mixture of two or more of these solvents. Drying in step g) is preferably done under one or more conditions selected from the group consisting of a pressure in the range of from 1 to 1013 mbar; a temperature in the range of from 50 to 210 °C, preferably in the range of from 60 to 180°C, more preferably in the range of from 80 to 150 °C; drying time in the range of from 30 minutes to 24 hours; drying in an atmosphere comprising nitrogen, preferably in an atmosphere having at least 90 volume-%, more preferably 95 volume-%, more preferably at least 98 volume-% nitrogen. Drying is done by one or more methods selected from the group consisting of contact drying, convection drying and radiation drying.

### Polyester + Spandex + PA and/or Cotton + optionally Filler

In some preferred embodiments of the method for separating a polymer blend, wherein the polymer blend comprises, preferably consists of polyester, second polymer, one or more third polymer(s), and optionally filler, with optionally one or more colorants, the method comprising:
a) providing the polymer blend and providing a solvent comprising gamma-valerolactone;
b) contacting the polymer blend with the solvent comprising gamma-valerolactone at a temperature T1 of < 170 °C, thereby obtaining a solvent, which is enriched in dissolved second polymer and a residue of the polymer blend, which is depleted of said second polymer and comprises the polyester, the one or more third polymers) and optionally the filler;
   and
c) optionally contacting the residue of the polymer blend obtained in b.2) with a solvent comprising gamma-valerolactone at a temperature T2 of >170 °C, thereby obtaining a solvent, which is enriched in dissolved polyester compared to the solvent provided in a) and optionally comprises at least a part of the filler and a residue of the polymer blend, which is depleted of polyester and comprises the one or more third polymers) and optionally the filler or a part of the filler;
wherein b) comprises:
b.1) contacting the polymer blend with the solvent comprising gamma-valerolactone at a temperature T1 of < 170 °C, thereby obtaining a solvent, which is enriched in dissolved second polymer and a residue of the polymer blend, which is depleted of said second polymer and comprises the polyester, optionally the third polymer and optionally the filler;
b.2) separating the solvent, which is enriched in dissolved second polymer and the residue of the polymer blend obtained in b.1), preferably by a physical separation method, thereby obtaining a separated solvent, which is enriched in dissolved second polymer compared to the solvent provided in a) and the residue of the polymer blend, which is depleted of said second polymer and comprises the polyester.

In some preferred embodiments of the method for separating a polymer blend, wherein the polymer blend comprises, preferably consists of polyester, second polymer, one or more third polymer(s), and optionally filler, with optionally one or more colorants, the method comprising:
a) providing the polymer blend and providing a solvent comprising gamma-valerolactone;
b) contacting the polymer blend with the solvent comprising gamma-valerolactone at a temperature T1 of < 170 °C, thereby obtaining a solvent, which is enriched in dissolved second polymer and a residue of the polymer blend, which is depleted of said second polymer and comprises the polyester, the one or more third polymer(s) and optionally the filler;
c.1) contacting the residue of the polymer blend obtained in b.2) with a solvent comprising gamma-valerolactone and having a temperature T1a, which is≤ T2 (T2 being a temperature of > 170°C), thereby obtaining a mixture comprising the polymer blend and the solvent;
c.2) heating the mixture obtained in c.1) to a temperature T2 of > 170 °C with a continuous heating, wherein the heating from T1a to T2 is preferably done with a heating rate in the range of from 20 K/h to 1000 K/h, 25 /K/h to 900 K/h, 30 k/h to 800 K/h, 40 k/h to 700 K/h, 60 k/h to 600 K/h, preferably maintaining T2, thereby obtaining a solvent, which is enriched in dissolved polyester compared to the solvent provided in a) and which optionally comprises at least a part of the filler; and optionally a residue of the polymer blend, which is depleted of polyester and comprises the third polymer and optionally the filler or a part of the filler;
c.3) optionally separating the solvent, which is enriched in dissolved polyester obtained in c.2) and which optionally comprises at least a part of the filler from the residue of the polymer blend, wherein the separation is preferably done by heated filtration, more preferably by heated filtration at a temperature T3 in the range of from T2 minus 20 °C to T2 plus 20 °C (T3 = T2 ± 20 °C), more preferably at a temperature in the range of from T2 minus 10 °C to T2 plus 10 °C (T3 = T2 ± 10 °C);
d) optionally cooling the solvent obtained in c.3), which is enriched in dissolved polyester compared to the solvent provided in a) and which optionally comprises at least a part of the filler, to a temperature below 170°C, preferably below 150°C, more preferably below 140°C, more preferably below 100°C, thereby obtaining a precipitated polyester and a solvent, which is depleted in dissolved polyester and which optionally comprises at least a part of the filler;
e) optionally separating the precipitated polyester obtained in d) from the solvent, which is depleted in dissolved polyester and which optionally comprises at least a part of the filler, thereby obtaining a precipitated polyester and the solvent, which is depleted in dissolved polyester and which optionally comprises at least a part of the filler;
wherein b) comprises:
b.1) contacting the polymer blend with the solvent comprising gamma-valerolactone at a temperature T1 of < 170 °C, thereby obtaining a solvent, which is enriched in dissolved second polymer and a residue of the polymer blend, which is depleted of said second polymer and comprises the polyester, optionally the third polymer and optionally the filler;
b.2) separating the solvent, which is enriched in dissolved second polymer and the residue of the polymer blend obtained in b.1), preferably by a physical separation method, thereby obtaining a separated solvent, which is enriched in dissolved second polymer compared to the solvent provided in a) and the residue of the polymer blend, which is depleted of said second polymer and comprises the polyester.

As indicated above, step b) and also step c), especially seen in combination with step d) as described above, results in a polyester being depleted of colorants in case that a colored polyester is used. The colorant(s) can be found in the solvent, which is enriched in dissolved second polymer obtained in b) and/or in the solvent, which is enriched in dissolved polyester obtained in c.2) and, after precipitation in d), remain in the solvent, which is depleted in dissolved polyester and which optionally comprises at least a part of the filler as obtained in e). In some preferred embodiments, the residue of the polymer blend obtained in c.3) comprises still a remaining amount of the polyester. Thus, it is preferred that is in a step c.4) said residue of the polymer blend obtained in c.3) comprising remaining amount of the polyester, is brought into contact with solvent comprising gamma-valerolactone, preferably at a temperature T3 as defined above, followed by filtration, preferably heated filtration at a temperature T3 as defined above, thereby obtaining a residue of the polymer blend, which is further depleted of polyester and comprises the third polymer and optionally the filler or a part of the filler; and a solvent, which contains the remaining amount of the polyester. Preferably, the contacting in c.4) is done in that, especially in cases where heated filtration is used in c.3), the residue of the polymer blend obtained in c.3) remains on the filter and is there brought into contact with solvent comprising gamma-valerolactone, wherein the solvent, which contains the remaining amount of the polyester obtained in c.4), is separated thereof due to filtration. In some preferred embodiments, the solvent, which contains the remaining amount of the polyester obtained in c.4) is combined with the solvent, which is enriched in dissolved polyester, obtained in c.3). In some preferred embodiments, where further steps d) and/or e) and/or f) and/or g) as described above are conducted, the precipitated polyester amounts finally obtained from the solvent, which contains the remaining amount of the polyester obtained in c.4) and from the solvent, which is enriched in dissolved polyester, obtained in c.3), are combined.

In some preferred embodiments of the method for separating a polymer blend, at least one of b) and c), preferably both b) and c), is/are conducted in continuous manner or discontinuous manner. According to this embodiment, step b) and/or c) is either carried out under a flow of the solvent comprising gamma-valerolactone (continuous manner) or in a stationary mode (discontinuous manner, batch mode). The contacting is done in one or more vessel(s), for example, one or more vessels are filled with colored polymer blend material and the solvent comprising gamma-valerolactone is directed through this vessel/these vessels with a specific flow. A preferred example is a, preferably stirred, vessel cascade.

In some preferred embodiments of the method for separating a polymer blend, at least one of b) and c), preferably both b) and c), is/are in counter current mode. According to this embodiment, step b) and/or c) is carried out in counter current mode. For example, if the contacting of step b) is done within a vessel, the solvent comprising gamma-valerolactone enters the vessel from one direction either side or top/bottom) and the colored polymeric material enters the vessel from an another, preferably an opposite, direction. In a preferred constellation wherein a vertically arranged vessel is used, the solvent comprising gamma-valerolactone enters the vessel from the bottom and the polymeric material enters the vessel from the top.

Irrespective whether b) and c), preferably both b) and c), is/are conducted in continuous manner or discontinuous manner and irrespective whether co current mode or counter current mode are applied, it is preferred that the solvent is preheated to the respective temperature (T1, T1a, T2, T3) and then contacted with the polymer blend or the respective residue.

In some preferred embodiments of the method for separating a polymer blend, at least one of b) and c), preferably both b) and c), is/are conducted under mechanical intermixing, wherein mechanical intermixing preferably comprises one or more methods selected from stirring, blending, and ultra sound.

In some preferred embodiments, the method for separating a polymer blend comprises:
f) optionally washing the precipitated polyester obtained in e);
g) optionally drying the precipitated polyester obtained in e) or the washed precipitated polyester obtained in f).

Washing in optional step f) is preferably done with a solvent selected from the group consisting of methanol, ethanol, propanol, isopropanol, acetonitrile, ethyl acetate, acetone, water or a mixture of two or more of these solvents. In some embodiments, washing in optional step f) is preferably done with a solvent selected from the group consisting of methanol, ethanol, propanol, isopropanol, acetonitrile, ethyl acetate, acetone, water, GVL or a mixture of two or more of these solvents. Drying in step g) is preferably done under one or more conditions selected from the group consisting of a pressure in the range of from 1 to 1013 mbar; a temperature in the range of from 50 to 210 °C, preferably in the range of from 60 to 180°C, more preferably in the range of from 80 to 150 °C; drying time in the range of from 30 minutes to 24 hours; drying in an atmosphere comprising nitrogen, preferably in an atmosphere having at least 90 volume-%, more preferably 95 volume-%, more preferably at least 98 volume-% nitrogen. Drying is done by one or more methods selected from the group consisting of contact drying, convection drying and radiation drying.

### Solvent comprising gamma-valerolactone

In some preferred embodiments of the method for separating a polymer blend, the solvent comprising gamma-valerolactone comprises gamma-valerolactone and one or more solvent(s) selected from the group consisting of water and organic solvents having a log K_{OW} in the range of from -1.6 to +1.6, preferably selected from the group consisting of water, C5 to C12 alkane, aliphatic C1 to C10 alcohol, C3 to C10 ketone, C2 to C10 cyclic ketone, HO-[C1 to C10 alkyl-O-]ₙ-H, with n being an integer in the range of from 2 to 1000, C1 to C10 alkyl-O-C3 to C10 alkyl ether, C3 to C10 cyclic ether, optionally substituted with one or more C1 to C6 alkyl group(s), C6 to C10 aromatic hydrocarbon, optionally substituted with one or more C1 to C6 alkyl group(s), C2 to C10 aliphatic ester, C8 to C11 aromatic ester, C5 to C10 cyclic carboxylic ester (lactone), C3 to C12 amide, preferably R¹R²N-C=O)-R³, wherein R¹, R² are independently a C1 to C4 alkyl group and R³ is selected from the group consisting of C1 to C9 alkyl group, C1 to C10 ester group and C1 to C6 ether group, C3 to C6 lactame, optionally substituted with one or more substituent selected from C1 to C6 alkyl group, C1 to C6 ester group and C1 to C6 ether group, and C5 imidazolidine, optionally substituted with one or more C1 to C6 alkyl group(s), C5 to C7 imidazolidone, optionally substituted with one or more C1 to C6 alkyl group(s).

Suitable solvents are known to the skilled person, as well as the decadic logarithm of the octanol-water partition coefficient (log K_{OW}). The octanol-water partition coefficient K_{OW} of a given compound is defined as the ratio of said compound's chemical concentration in the octanol phase relative to said compound's chemical concentration in the aqueous phase in a two-phase system of 1-octanol and water at a temperature of 25 °C (298 K). Methods to determine the octanol-water partition coefficient K_{OW} of a given compound are known to the skilled person. For example, the octanol-water partition coefficient K_{OW} of a given compound is determined using the shake-flask method which consists of dissolving the compound in a volume of high-purity 1-octanol and deionized water (pre-mixed and calibrated for at least 24 h) and measuring the concentration of the compound in each the 1-octanol phase and the water phase by a sufficiently exact method, preferably via UV/VIS spectroscopy. This method is described in the OECD Guideline for the testing of chemicals, number 107, adopted on July 27th, 1995. Values of KOW for a plurality of substances are known and are easy to be found, for example, in the Dortmund Database (DDB, cf. http://www.ddbst.com/ddb-search).

Regarding suitable solvents, for example, an aliphatic C1 to C10 alcohol is preferably a C1 to C6 monool, more preferably one or more selected from the group consisting of methanol, ethanol and butanol. A C3 to C10 ketone is preferably acetone or methylethyl ketone or a mixture of acetone and methylethyl ketone. A C2 to C10 cyclic ketone is preferably cyclohexanone. A C3 to C10 cyclic ether optionally substituted with one or more C1 to C3 alkyl group(s) is preferably tetrahydrofuran or 2-methyltetrahydrofuran or a mixture of tetrahydrofuran and 2-methyltetrahydrofuran. A C6 to C10 aromatic hydrocarbon, optionally substituted with one or more C1 to C3 alkyl group(s) is preferably one or more selected from the group consisting of benzene, toluene, ethylbenzene, xylene (o or p) and mesitylene. A C1 to C10 ester is preferably one or more selected from the group consisting of esters of a C1 to C6 aliphatic monol with a C2 to C5 aliphatic acid. A C5 to C10 cyclic carboxylic ester (lactone) is preferably one or more selected from the group consisting of delta-valerolactone, methylated γ-butyrolactone, ethylated γ-butyrolactone, propylated γ-butyrolactone, and β-propiolactone. A C3 to C6 lactame, optionally substituted with one or more C1 to C3 alkyl group(s), is preferably selected from the group consisting of 2-pyrrolidone, 3-pyrrolidone and mixtures of 2-pyrrolidone, 3-pyrrolidone, each optionally substituted with one or more C1 to C3 alkyl group(s), preferably at the nitrogen atom, more preferably N-methyl-2-pyrollidone. An imidazolidone, optionally substituted with one or more C1 to C3 alkyl group(s) is preferably 1,3-dimethyl-2-imidazolidinone.

In some preferred embodiments of the method for separating a polymer blend, at least 1 weight-%, more preferably at least 5 weight-%, more preferably at least 10 weight-%, more preferably at least 20 weight-%, more preferably at least 30 weight-%, more preferably at least 40 weight-%, more preferably at least 50 weight-%, more preferably at least 80 weight-%, more preferably at least 90 weight-%, more preferably at least 95 weight-%, more preferably at least 99 weight-% of the solvent consists of gamma-valerolactone.

In some preferred embodiments of the process for discoloration, the contacting in b) and/or c) is done with a in mass based ratio solvent : polymer blend provided in a) or residue obtained in b) in the range of 1:1 to 100:1, preferably in the range of from 1:1 to 10:1.

In some preferred embodiments of the method for separating a polymer blend, in b), b.1), b.2), c), c.1), c.2), c.3) the same solvent comprising gamma-valerolactone is used.

Preferably, the method comprises
I) providing a polyester obtained by method step d) and/or e) and/or f) and/or g) as disclosed herein above;
II) preparing a textile, a fiber, a packaging, a plastic, an automotive part, an electronic part from the polyester provided in I).

Preferably, a food packaging, a beverage packaging, a clothing, foot wear, a wire, a cable is prepared in II), wherein preferably in case that the polyester is selected from PBAT, PEF and PET, preferably PET, a textile application, a fiber application, a packaging application, a plastic application, more preferably a food packaging, a beverage packaging, a clothing and foot wear is prepared in II); wherein in case that the polyester is PBT, a textile application, an automotive application, or an electronic application, more preferably a wire and/or a cable is prepared in II). Preferably, especially if the polyester is selected from PBAT, PEF and PET, and is more preferably PET, in II) a textile, more preferably a food packaging, a beverage packaging, a clothing or foot wear, is prepared. Preferably, especially if the polyester is PBT, a cable is prepared in II).

A cable comprises a polyester as described above and a conductor. A "conductor" is an electrical conductor or an optical waveguide. Electrical conductors are usually made of copper, and more rarely of aluminum or suitable metal alloys. Optical waveguides comprise quartz glass fibers.

The present invention is further illustrated by the following embodiments and combinations of embodiments as indicated by the respective dependencies and back-references. In particular, it is noted that in each instance where a range of embodiments is mentioned, for example in the context of a term such as "The ... of any of embodiments 1 to 4", every embodiment in this range is meant to be explicitly disclosed for the skilled person, i.e. the wording of this term is to be understood by the skilled person as being synonymous to "The ... of any of embodiments 1, 2, 3, and 4".

Embodiment (1): A method for separating a polymer blend, which comprises
i) a polyester and
ii) one or more components) selected from the group consisting of a second polymer, a third polymer and a filler, wherein second polymer and third polymer are different from each other and different from the polyester of i);
the method comprising:
a) providing the polymer blend and providing a solvent comprising gamma-valerolactone;
b) contacting the polymer blend with the solvent comprising gamma-valerolactone at a temperature T1 of < 170 °C, thereby obtaining a solvent, which is enriched in dissolved second polymer and a residue of the polymer blend, which is depleted of said second polymer and comprises the polyester, optionally the third polymer and optionally the filler;
   and
c) optionally contacting the residue of the polymer blend obtained in b) with a solvent comprising gamma-valerolactone at a temperature T2 of > 170 °C, thereby obtaining a solvent, which is enriched in dissolved polyester compared to the solvent provided in a) and comprises optionally at least a part of the filler, and optionally a residue of the polymer blend, which is depleted of polyester and comprises optionally the third polymer and optionally the filler or a part of the filler;
wherein b) comprises:
b.1) contacting the polymer blend with the solvent comprising gamma-valerolactone at a temperature T1 of < 170 °C, thereby obtaining a solvent, which is enriched in dissolved second polymer and a residue of the polymer blend, which is depleted of said second polymer and comprises the polyester, optionally the third polymer and optionally the filler;
b.2) separating the solvent, which is enriched in dissolved second polymer and the residue of the polymer blend obtained in b.1), preferably by a physical separation method, thereby obtaining a separated solvent, which is enriched in dissolved second polymer compared to the solvent provided in a) and the residue of the polymer blend, which is depleted of said second polymer and comprises the polyester.

Embodiment (2): The method for separating a polymer blend of embodiment 1, wherein c) comprises:
c.1) contacting the residue of the polymer blend obtained in b.2) with a solvent comprising gamma-valerolactone and having a temperature T1a, which is ≤ T2 (T2 being a temperature of > 170 °C), thereby obtaining a mixture comprising the polymer blend and the solvent;
c.2) heating the mixture obtained in c.1) to a temperature T2 of > 170 °C with a continuous heating, wherein the heating from T1a to T2 is preferably done with a heating rate in the range of from 20 K/h to 1000 K/h, 25 K/h to 900 K/h, 30 K/h to 800 K/h, 40 K/h to 700 K/h, 60 K/h to 600 K/h, preferably maintaining T2, thereby obtaining a solvent, which is enriched in dissolved polyester compared to the solvent provided in a) and which optionally comprises at least a part of the filler; and optionally a residue of the polymer blend, which is depleted of polyester and comprises the third polymer and optionally the filler or a part of the filler;
c.3) separating the solvent, which is enriched in dissolved polyester obtained in c.2) from the residue of the polymer blend, wherein the separation is preferably done by heated filtration, more preferably by heated filtration at a temperature T3 in the range of from T2 minus 20 °C to T2 plus 20 °C (T3 = T2 ± 20°C), more preferably at a temperature T3 in the range of from T2 minus 10 °C to T2 plus 10 °C (T3 = T2 ± 10°C);
wherein the method preferably further comprises:
c.4) contacting the residue of the polymer blend obtained in c.3), if it comprises a remaining amount of the polyester, with solvent comprising gamma-valerolactone, preferably at a temperature T3 as defined above, followed by filtration, thereby obtaining a residue of the polymer blend, which is further depleted of polyester and comprises the third polymer and optionally the filler or a part of the filler; and a solvent, which contains the remaining amount of the polyester.

Embodiment (3): The method for separating a polymer blend of embodiment 2, wherein if T1a is below 120°C, the heating is done with a continuous heating, preferably with a heating rate in the range of from 20 K/h to 1000 K/h, 25 /K/h to 900 K/h, 30 k/h to 800 K/h, 40 K/h to 700 K/h, 60 K/h to 600 K/h, preferably the heating is done so that the mixture obtained in c.1) is in the temperature range of 110-130 °C for less than 60 minutes, preferably for less than 50 minutes, more preferably for less than 40 minutes, more preferably for less than 30 minutes, more preferably for less than 20 minutes, or, if T1a is above 120°C, the heating is done with a continuous heating, preferably with a heating rate in the range of from.0.1 to 1000 K/h, more preferably in the range of from 5 to 500 K/h, more preferably in the range of from 25 to 300 K/h.

Embodiment (4): The method for separating a polymer blend of any one of embodiments 1 to 3 comprising:
d) cooling the solvent obtained in c) or c.3), which is enriched in dissolved polyester compared to the solvent provided in a) and which optionally comprises at least a part of the filler, to a temperature below 170°C, preferably below 150°C, more preferably below 140°C, more preferably below 100°C, thereby obtaining a precipitated polyester and a solvent, which is depleted in dissolved polyester and which optionally comprises at least a part of the filler.

Embodiment (5): The method for separating a polymer blend of any one of embodiments 1 to 4 comprising
e) separating the precipitated polyester obtained in d) from the solvent, which is depleted in dissolved polyester, thereby obtaining a precipitated polyester and the solvent, which is depleted in dissolved polyester and which optionally comprises at least a part of the filler;
wherein preferably the method for separating a polymer blend further comprises:
f) optionally washing the precipitated polyester obtained in e);
g) optionally drying the precipitated polyester obtained in e) or the washed precipitated polyester obtained in f).

Embodiment (6): The method for separating a polymer blend of any one of embodiments 1 to 5 comprising recycling the separated solvent obtained in b.2) and/or the separated solvent obtained in e) at least partially to b) and/or c), optionally after one or more work-up steps).

Embodiment (7): The method for separating a polymer blend of any one of embodiments 1 to 6, wherein T1 is a temperature in the range of from 110 to < 170°C, preferably a temperature in the range of from 110 to 165 °C, more preferably a temperature in the range of from 120 to 150 °C.

Embodiment (8): The method for separating a polymer blend of any one of embodiments 1 to 7, wherein T2 is a temperature in the range of from > 170°C to 200 °C, preferably a temperature in the range of from 175 to 190 °C, more preferably a temperature in the range of from 180 to 190 °C.

Embodiment (9): The method for separating a polymer blend of any one of embodiments 1 to 8, wherein a), b) c) and optionally d) are done at a pressure in the range of from 800 to 200,000 hPa.

Embodiment (10): The method for separating a polymer blend of any one of embodiments 1 to 9, wherein the polyester according to i) is based on at least one polyhydric alcohol and at least one organic dicarboxylic acid.

Embodiment (11): The method for separating a polymer blend of any one of embodiments 1 to 10, wherein the at least one polyhydric alcohol of the polyester of i) is at least one diol having from 2 to 12 carbon atoms, preferably from 2 to 6 carbon atoms, more preferably, the at least one polyhydric alcohol comprises at least 1,4-butanediol or 1,2-ethanediol.

Embodiment (12): The method for separating a polymer blend of any one of embodiments 1 to 11, wherein the at least one organic dicarboxylic acid of the polyester of i) is selected from the group consisting of terephthalic acid, adipic acid, 2,5-furandicarboxylic acid and mixture of two or more of these dicarboxylic acids and is preferably at least terephthalic acid.

Embodiment (13): The method for separating a polymer blend of any one of embodiments 1 to 12, wherein the polyester according to i) is selected from the group consisting of a polymer based on 1,4-butanediol and terephthalic acid (polybutylene terephthalate, PBT), a polymer based on 1,2-ethanediol and terephthalic acid (polyethylene terephthalate, PET), a copolymer of 1,4-butanediol, adipic acid and terephthalic acid (polybutylenadipat-terephthalat, PBAT), a polymer of 1,2-ethanediol and 2,5-furandicarboxylic acid (polyethylene furanoate, PEF) and mixtures of two or more of these (co)polymers, preferably the polyester according to i) is a polymer based on 1,4-butanediol and terephthalic acid (PBT) or a polymer based on 1,2-ethanediol and terephthalic acid (PET).

Embodiment (14): The method for separating a polymer blend of any one of embodiments 1 to 13, wherein the second polymer is preferably selected from the group consisting of polyurethane (PU), polyethylene glycol (PEG), polytetrahydrofuran (pTHF), mixtures of these polymers and copolymers of these polymers, wherein the second polymer is more preferably a copolymer of PU and PEG and/or pTHF, more preferably spandex (copolymer of PU and PEG or of PU and pTHF).

Embodiment (15): The method for separating a polymer blend of any one of embodiments 1 to 14, wherein the third polymer is preferably selected from the group consisting of polyolefins, preferably polyethylene (PE) and polypropylene (PP), polyamide (PA) and viscose, natural polymer, preferably wool, or cotton, mixtures of two or more of these polymers and copolymers of two or more of these polymers, wherein the third polymer is preferably selected from PA, wool, cotton, viscose and mixtures of two or more of these polymers.

Embodiment (16): The method for separating a polymer blend of any one of embodiments 1 to 15, wherein the filler is selected from the group consisting of glass fiber, coal fiber, carbon black, inorganic salts (for example, talc, disodium carbonate), adhesive, thickener, antifoam agent, finishing agent (for example water/oil/stain repellent, flame retardant, anticrease agent, biocide), binder, surfactant (for example, softener, scouring agent, antistatic agent), desizing agent, bleaching agent, oxidant, UV filter, emulsionant, fixing agent, washing dispersant, profiling agent.

Embodiment (17): The method for separating a polymer blend of any one of embodiments 1 to 16, wherein the contacting in b) or b.1) is done for a period of time of at least 5 minutes, preferably in the range of from 5 minutes to 10 hours, more preferably in the range of from 5 minutes to 5 hours, more preferably in the range of from 5 minutes to 4 hours.

Embodiment (18): The method for separating a polymer blend of any one of embodiments 1 to 17, wherein the contacting in c) or c.1) is done for a period of time of at least 0.1 hours, preferably in the range of from 1 minute to 10 hours, more preferably in the range of from 1 minute to 2 hours, more preferably in the range of from 5 minutes to 1 hour, more preferably in the range of from 5 to 30 minutes.

Embodiment (19): The method for separating a polymer blend of any one of embodiments 1 to 18, wherein the polymer blend comprises, preferably consists of polyester, second polymer, optionally filler, with optionally one or more colorants, the method comprising:
a) providing the polymer blend and providing a solvent comprising gamma-valerolactone;
b) contacting the polymer blend with the solvent comprising gamma-valerolactone at a temperature T1 of < 170 °C, thereby obtaining a solvent, which is enriched in dissolved second polymer and a residue of the polymer blend, which is depleted of said second polymer and comprises the polyester, and optionally the filler;
wherein b) comprises:
b.1) contacting the polymer blend with the solvent comprising gamma-valerolactone at a temperature T1 of < 170 °C, thereby obtaining a solvent, which is enriched in dissolved second polymer and a residue of the polymer blend, which is depleted of said second polymer and comprises the polyester, optionally the third polymer and optionally the filler;
b.2) separating the solvent, which is enriched in dissolved second polymer and the residue of the polymer blend obtained in b.1), preferably by a physical separation method, thereby obtaining a separated solvent, which is enriched in dissolved second polymer compared to the solvent provided in a) and the residue of the polymer blend, which is depleted of said second polymer and comprises the polyester;
c.1) contacting the residue of the polymer blend obtained in b.2) with a solvent comprising gamma-valerolactone and having a temperature T1a, which is ≤ T2 (T2 being a temperature of > 170°C), thereby obtaining a mixture comprising the polymer blend and the solvent;
c.2) heating the mixture obtained in c.1) to a temperature T2 of > 170 °C with a continuous heating, wherein the heating from T1a to T2 is preferably done with a heating rate in the range of from 20 K/h to 1000 K/h, 25 /K/h to 900 K/h, 30 k/h to 800 K/h, 40 k/h to 700 K/h, 60 k/h to 600 K/h, preferably maintaining T2, thereby obtaining a solvent, which is enriched in dissolved polyester compared to the solvent provided in a) and which optionally comprises at least a part of the filler; and optionally a residue of the polymer blend, which is depleted of polyester and comprises the third polymer and optionally the filler or a part of the filler;
c.3) optionally separating the solvent, which is enriched in dissolved polyester obtained in c.2) from the residue of the polymer blend, wherein the separation is preferably done by heated filtration, more preferably by heated filtration at a temperature T3 in the range of from T2 minus 20 °C to T2 plus 20 °C (T3 = T2±20 °C), more preferably at a temperature T3 in the range of from T2 minus 10 °C to T2 plus 10 °C (T3 = T2±10 °C);
d) optionally cooling the solvent obtained in c.3), which is enriched in dissolved polyester compared to the solvent provided in a) and which optionally comprises at least a part of the filler, to a temperature below 170°C, preferably below 150°C, more preferably below 140°C, more preferably below 100°C, thereby obtaining a precipitated polyester and a solvent, which is depleted in dissolved polyester and optionally comprises at least a part of the filler;
e) optionally separating the precipitated polyester obtained in d) from the solvent, which is depleted in dissolved polyester and which optionally comprises at least a part of the filler, thereby obtaining a precipitated polyester and the solvent, which is depleted in dissolved polyester and which optionally comprises at least a part of the filler;
wherein preferably the method for separating a polymer blend further comprises:
f) optionally washing the precipitated polyester obtained in e);
g) optionally drying the precipitated polyester obtained in e) or the washed precipitated polyester obtained in f); and/or
wherein the method preferably further comprises:
c.4) contacting the residue of the polymer blend obtained in c.3), if it comprises a remaining amount of the polyester, with solvent comprising gamma-valerolactone, preferably at a temperature T3 as defined above, followed by filtration, thereby obtaining a residue of the polymer blend, which is further depleted of polyester and comprises the third polymer and optionally the filler or a part of the filler; and a solvent, which contains the remaining amount of the polyester.

Embodiment (20): The method for separating a polymer blend of any one of embodiments 1 to 19, wherein the polymer blend comprises, preferably consists of polyester, second polymer, one or more third polymer(s), and optionally filler, with optionally one or more colorants, the method comprising:
a) providing the polymer blend and providing a solvent comprising gamma-valerolactone;
b) contacting the polymer blend with the solvent comprising gamma-valerolactone at a temperature T1 of < 170 °C, thereby obtaining a solvent, which is enriched in dissolved second polymer and a residue of the polymer blend, which is depleted of said second polymer and comprises the polyester, the one or more third polymer(s) and optionally the filler;
   and
c) optionally contacting the residue of the polymer blend obtained in b.2) with a solvent comprising gamma-valerolactone at a temperature T2 of >170 °C, thereby obtaining a solvent, which is enriched in dissolved polyester compared to the solvent provided in a) and optionally comprises at least a part of the filler and a residue of the polymer blend, which is depleted of polyester and comprises the one or more third polymer(s) and optionally the filler or a part of the filler;
wherein b) comprises:
b.1) contacting the polymer blend with the solvent comprising gamma-valerolactone at a temperature T1 of < 170 °C, thereby obtaining a solvent, which is enriched in dissolved second polymer and a residue of the polymer blend, which is depleted of said second polymer and comprises the polyester, optionally the third polymer and optionally the filler;
b.2) separating the solvent, which is enriched in dissolved second polymer and the residue of the polymer blend obtained in b.1), preferably by a physical separation method, thereby obtaining a separated solvent, which is enriched in dissolved second polymer compared to the solvent provided in a) and the residue of the polymer blend, which is depleted of said second polymer and comprises the polyester.

Embodiment (21): The method for separating a polymer blend of embodiment 20, wherein the polymer blend comprises, preferably consists of polyester, second polymer, one or more third polymer(s), and optionally filler, with optionally one or more colorants, the method comprising:
a) providing the polymer blend and providing a solvent comprising gamma-valerolactone;
b) contacting the polymer blend with the solvent comprising gamma-valerolactone at a temperature T1 of < 170 °C, thereby obtaining a solvent, which is enriched in dissolved second polymer and a residue of the polymer blend, which is depleted of said second polymer and comprises the polyester, the one or more third polymers) and optionally the filler;
wherein b) comprises:
b.1) contacting the polymer blend with the solvent comprising gamma-valerolactone at a temperature T1 of < 170 °C, thereby obtaining a solvent, which is enriched in dissolved second polymer and a residue of the polymer blend, which is depleted of said second polymer and comprises the polyester, optionally the third polymer and optionally the filler;
b.2) separating the solvent, which is enriched in dissolved second polymer and the residue of the polymer blend obtained in b.1), preferably by a physical separation method, thereby obtaining a separated solvent, which is enriched in dissolved second polymer compared to the solvent provided in a) and the residue of the polymer blend, which is depleted of said second polymer and comprises the polyester;
c.1) optionally contacting the residue of the polymer blend obtained in b.2) with a solvent comprising gamma-valerolactone and having a temperature T1a, which is≤ T2 (T2 being a temperature of > 170°C), thereby obtaining a mixture comprising the polymer blend and the solvent;
c.2) heating the mixture obtained in c.1) to a temperature T2 of > 170 °C with a continuous heating, wherein the heating from T1a to T2 is preferably done with a heating rate in the range of from 20 K/h to 1000 K/h, 25 /K/h to 900 K/h, 30 k/h to 800 K/h, 40 k/h to 700 K/h, 60 k/h to 600 K/h, preferably maintaining T2, thereby obtaining a solvent, which is enriched in dissolved polyester compared to the solvent provided in a) and which optionally comprises at least a part of the filler; and optionally a residue of the polymer blend, which is depleted of polyester and comprises the third polymer and optionally the filler or a part of the filler;
c.3) optionally separating the solvent, which is enriched in dissolved polyester obtained in c.2) and which optionally comprises at least a part of the filler from the residue of the polymer blend, wherein the separation is preferably done by heated filtration, more preferably by heated filtration at a temperature T3 in the range of from T2 minus 20 °C to T2 plus 20 °C (T3 = T2 ± 20 °C), more preferably at a temperature in the range of from T2 minus 10 °C to T2 plus 10 °C (T3 = T2 ± 10 °C).
d) optionally cooling the solvent obtained in c.3), which is enriched in dissolved polyester compared to the solvent provided in a) and which optionally comprises at least a part of the filler, to a temperature below 170°C, preferably below 150°C, more preferably below 140°C, more preferably below 100°C, thereby obtaining a precipitated polyester and a solvent, which is depleted in dissolved polyester and which optionally comprises at least a part of the filler;
e) optionally separating the precipitated polyester obtained in d) from the solvent, which is depleted in dissolved polyester and which optionally comprises at least a part of the filler, thereby obtaining a precipitated polyester and the solvent, which is depleted in dissolved polyester and which optionally comprises at least a part of the filler;
wherein preferably the method for separating a polymer blend further comprises:
f) optionally washing the precipitated polyester obtained in e);
g) optionally drying the precipitated polyester obtained in e) or the washed precipitated polyester obtained in f); and/or
wherein the method preferably further comprises:
c.4) contacting the residue of the polymer blend obtained in c.3), if it comprises a remaining amount of the polyester, with solvent comprising gamma-valerolactone, preferably at a temperature T3 as defined above, followed by filtration, thereby obtaining a residue of the polymer blend, which is further depleted of polyester and comprises the third polymer and optionally the filler or a part of the filler; and a solvent, which contains the remaining amount of the polyester.

Embodiment (22): The method for separating a polymer blend of any one of embodiments 1 to 21, wherein the solvent comprising gamma-valerolactone comprises gamma-valerolactone one or more solvent(s) selected from the group consisting of water and organic solvents having a log K_{OW} in the range of from -1.6 to +1.6, preferably selected from the group consisting of water, C5 to C12 alkane, aliphatic C1 to C10 alcohol, C3 to C10 ketone, C2 to C10 cyclic ketone, HO-[C1 to C10 alkyl-O-]ₙ-H, with n being an integer in the range of from 2 to 1000, C1 to C10 alkyl-O-C3 to C10 alkyl ether, C3 to C10 cyclic ether, optionally substituted with one or more C1 to C6 alkyl groups), C6 to C10 aromatic hydrocarbon, optionally substituted with one or more C1 to C6 alkyl groups), C2 to C10 aliphatic ester, C8 to C11 aromatic ester, C5 to C10 cyclic carboxylic ester lactone), C3 to C12 amide, preferably R¹R²N-C=O)-R³, wherein R¹, R² are independently a C1 to C4 alkyl group and R³ is selected from the group consisting of C1 to C9 alkyl group, C1 to C10 ester group and C1 to C6 ether group, C3 to C6 lactame, optionally substituted with one or more substituent selected from C1 to C6 alkyl group, C1 to C6 ester group and C1 to C6 ether group, and C5 imidazolidine, optionally substituted with one or more C1 to C6 alkyl groups), C5 to C7 imidazolidone, optionally substituted with one or more C1 to C6 alkyl groups).

Embodiment (23): The method for separating a polymer blend of any one of embodiments 1 to 22, wherein at least 1 weight-%, more preferably at least 5 weight-%, more preferably at least 10 weight-%, more preferably at least 20 weight-%, more preferably at least 30 weight-%, more preferably at least 40 weight-%, more preferably at least 50 weight-%, more preferably at least 80 weight-%, more preferably at least 90 weight-%, more preferably at least 95 weight-%, more preferably at least 99 weight-%of the solvent consists of gamma-valerolactone.

Embodiment (24): The method for separating a polymer blend of any one of embodiments 1 to 23, wherein in b), b.1), b.2), c), c.1), c.2), c.3) the same solvent comprising gamma-valerolactone is used.

Embodiment (25): A method according to any one of embodiments 4 to 24 comprising
I) providing a polyester obtained by method step d) and/or e) and/or f) and/or g) according to embodiment 4;
II) preparing a textile, a fiber, a packaging, a plastic, an automotive part, an electronic part from the polyester provided in I).

Embodiment (26): The method according to embodiment 25 wherein a food packaging, a beverage packaging, a clothing, foot wear, a wire, a cable is prepared in II), wherein preferably in case that the polyester is selected from PBAT, PEF and PET, preferably PET, a textile application, a fiber application, a packaging application, a plastic application, more preferably a food packaging, a beverage packaging, a clothing and foot wear is prepared in II); wherein in case that the polyester is PBT, a textile application, an automotive application, or an electronic application, more preferably a wire and/or a cable is prepared in II).

The present invention is further illustrated by the following reference examples, comparative examples, and examples.

### Examples

### Methods

### XRF Screening Analysis (for before/after treatment)

XRF screening was performed directly on the sample material without preparation. The sample material was weighed into measurement cuvettes and the semi-quant program on a WD-XRF instrument was started after insertion of the cuvettes. The screening method serves as a rough clustering method, assigning elements to concentration ranges.

### Analysis of Ca, Fe, K, Sb and Ti (before treatment)

The sample was prepared using an automated acid digestion procedure using a mixture of different mineral acids. The analytes were determined in the obtained solution by inductively coupled plasma-optical emission spectrometry (ICP-OES). Sample preparation and analysis was carried out in duplicate. The reported result is the mean value of both individual analysis results.

### Analysis of Si (before treatment)

The sample was prepared using a flux digestion after incineration of the sample in a muffle furnace. Si was determined in the obtained solution by inductively coupled plasma-optical emission spectrometry (ICP-OES). Sample preparation and analysis was carried out in duplicate. The reported result is the mean value of both individual analysis results.

### Analysis of Cl and S (before treatment)

### Chlorine (calculated from the sum of Cl, Br, I)

The sample is weighed into a quartz crucible and burned in oxygen with nitrogen as carrier gas. The combustion gases are cleaned from by-products in concentrated sulfuric acid and then transferred into a coulometric cell. The detection is performed by coulometry.

### Analysis of Si (for PBT sample)

The sample was prepared using an automated flux digestion procedure after incineration of the sample in a muffle furnace. Si was determined in the obtained solution by inductively coupled plasma-optical emission spectrometry (ICP-OES). Sample preparation and analysis was carried out in duplicate. The reported result is the mean value of both individual analysis results.

### Intrinsic viscosity:

### General

For the determination of the intrinsic viscosity a concentration series of the polymer in the particular solvent, here o-Chlorphenol, is made. The concertation range of the polymer for the analysis of the intrinsic viscosity is determined by the relative viscosity and should be in the range between 1.2 and 2.5 [Kulicke 2003].

The value of the intrinsic viscosity is obtained as the y-axis intercept of a diagram of the reduced viscosity as a function of the concentration by an extrapolation of a linear fit to the concertation 0.

### Sample preparation and measurement

A concertation series is prepared covering usually 3 to 7 different concentrations. The concertation range is determined by the range of the relative viscosity (see above).

The polymers are dissolved in o-Chlorphenol by stirring during the night. Before use, every polymer solution is filtered over a metal filter with a mesh size of 0,077mm.

Measurements are carried out using an effluent viscometer of the Ubbelohde capillary type (Micro-Ubbelohde II, k=0,10326, App.Nr.: 720-13-0573) in a Lauda device (Lauda Pro Line 24) at 25°C. Temperature is controlled by a thermostat keeping the temperature constant in the range of +/- 0.01°C.

The viscosity of the different polymer solutions is determined by measuring the time it takes for the sample to flow through a capillary of defined length and radius under the influence of gravity. For the determination of the relative viscosity, the reference liquid, here o-Chlorphenol, is measured under the same conditions. The measured running times are corrected according to Hagenbach (W.-M. Kulicke and C. Clasen, Viscosimetry of Polymers and Polyelectrolytes, Springer (2003)).

### Hazen color index:

The Hazen color index (APHA color number) was determined according to DIN EN ISO 6271:2016-05 (Pt/Co, APHA, ASTM D1209, D5386).

### CIE-LAB:

L*a*b* values were determined in that the samples were measured using an integrating sphere and UV/VIS-remission spectra (with a wavelength area of 400-700 nm) were obtained. The data of these spectra were analyzed by the software OptLab-SPX using 2° standard observer and the standard light type C. The OptLab-SPX software calculates the L*a*b*-values based on DIN 5033 and DIN EN ISO 11664-1.6 from the years 2007-2014.

### GC area%:

The sample was analyzed by gas chromatography (GC), wherein the method detected individual components from a sample dependent on their individual retention times. The concentration of the individual component in the sample were given in its percental peak area as GC-area%.

### GPC (Gel-Permeation Chromatography):

### Sample preparation:

7.5 mg sample was dissolved in 5 ml eluent (HFIP + 0.05 weight-% Trifluoro potassium acetate) over night. All sample solutions were filtered by a Millipore Millex FG (0.2 µm) filtered prior to injection. Sealed sample vials were placed into the auto sampler.

### Experimental conditions:

An Agilent 1100 HPLC system, consisting of an isocratic pump, vacuum degasser, auto sampler and a column oven (40°C) was used. Furthermore, contains the Agilent system as detectors a Differential Refractive Index (DRI) and a variable Ultra Violet (UVW) Detector. Data acquisition and data processing of conventionally SEC data were done by WinGPC Unichrom, of PSS (Polymer Standard Services). A combination of a PL-HFIP guard (7.5 x 50 mm) column and 2 PL-HFIP Gel columns (7.5 x 300 mm, 9µ) of Agilent were put in series. As an eluent, Hexafluoriso-propanol + 0.05 weight-% Trifluoro potassium acetate was used as a flow rate of 1 ml/min. Of each sample solution 50µl was injected. The calibration was obtained by narrow molar mass distributed PMMA standards (Polymer Standard Services) having a molar mass range of M= 800 till M = 2.200.000 g/mol. Molar masses outside this range were extrapolated.

### Quantitative ¹H NMR Spectroscopy (q¹H NMR):

The contents of polyethylene terephthalate (PET) and gamma-Valerolactone (GVL) in the samples were determined by quantitative ¹H-NMR spectroscopy. All NMR spectra were recorded at T = 298.2 K on a Bruker Avance III 400 spectrometer operating at 400.33 MHz for ¹H. The spectrometer was equipped with a 5 mm z-gradient broadband observe smartprobe. Chemical shifts were referenced to tetramethylsilane (TMS, *δ*(TMS) = 0 ppm). ¹H 1D spectra were recorded under quantitative conditions using the *zg30* pulse program with a sampling of 128k data points, the relaxation delay D1 was chosen as 40 seconds for the solvent chloroform-d₁ (CDCl₃) or 120 seconds for the solvent sulfuric acid-d₂ (D₂SO₄). 8 transients were summed up per spectrum. For processing in Bruker TopSpin 4.0.9 software, 64k data points were used, an exponential window function with a line broadening of 0.3 Hz was applied. Automatic baseline correction with a polynomial of 5 was performed, phase correction and integration was performed manually by the user.

For the determination of PET, samples were prepared by exact weighting (Mettler-Toledo XP205DR analytical balance) of the internal standard 1,1,2,2-tetrachloroethane (TCE) and the analyte in a suitable vial, followed by dissolution in 2 mL of a 2:1 mixture of CDCl₃ and trifluoroacetic acid (TFA) with traces of TMS as internal reference.

For the determination of PET in textile samples containing cotton, samples were prepared by exact weighting (Mettler-Toledo XP205DR analytical balance) of the internal standard dime-thylmalonic acid (DMMS) and the analyte in a suitable vial, followed by dissolution in 2ml D₂SO₄. In all cases, the samples were transferred into 5 mm NMR tubes for measurement. Deuterated solvents TFA and CDCl₃ as well as TMS were purchased from Euriso-Top GmbH. D₂SO₄, TCE and DMMS (certified internal standards) were purchased from Sigma-Aldrich. All solvents and internal standards were used as received.

The content of test item was calculated by using the following equation: $w = \frac{{E}_{St} ⋅ {I}_{K} ⋅ {M}_{K} ⋅ {A}_{St} ⋅ {R}_{St}}{{E}_{P} ⋅ {I}_{St} ⋅ {M}_{St} ⋅ {A}_{K}}$

In this equation: w= mass fraction of the analyte in the sample [g/100 g], *Iₖ* = peak intensity of the analyte, *Iₛₜ =* peak intensity of the standard, *E_{P}* = sample mass [g], *E_{St} =* mass of the standard [g], *A_{K} =* protons/molecule of analyte, *A_{St} =* protons/molecule of the standard, *M_{K} =* molecular weight of the analyte [g/mol], *M_{St} =* molecular weight of the standard [g/mol], and *R_{St} =* purity of the standard [g/100 g].

For quantification triplicate determinations were carried out.

Evaluation of PET in pure PET samples was performed by using 2 protons/molecule of the internal standard TCE (at about 5.9 ppm) and 4 selected protons/molecule of the analyte PET (at about 8.1 ppm).

Evaluation of PET in textile samples containing cotton was performed by using 6 protons/molecule of the internal standard DMMS (at about 1.80 ppm) and 4 protons/molecule of the analyte PET (at about 8.4 ppm).

### Chemicals

| (Chemical) name | Abbreviation |
|---|---|
| Polymeric materials | |
| polyethylene terephthalate | PET |
| block copolymer comprising polyurethane and polyethylene glycol or pTHF *(*≥85 weight-% polyurethane) | Elastane (Spandex) |
| Polyamide | PA |
| Cotton | --- |
| viscose | --- |

| solvents | |
|---|---|
| gamma-valerolactone (5-methyl oxolan-2-one) | GVL |
| water | -- |
| acetone | -- |
| 1,3-dimethyl-2-imidazolidinone | DMI |
| ethyl benzoate | --- |

### Reference Example 1a: PET recycling with stepwise heating (comparative procedure)

Colored polymeric PET material (in any colour) was cut/shredded into pieces and placed in a reaction vessel (e.g. flask, tube, reaction vessel). Degassed gamma-valerolactone (GVL) was added (in mass-based ratio GVL:polymeric material 1:1 to 100:1, preferred 1:1-10:1) and the mixture was heated at 1013 mbar by use of a suitable heating system (e.g. oil bath, heating blocks, mini-plant vessels) to first 120 °C for 5-60 min, then to 170 °C for 1-30 min, after that to 180 °C for 1-30 min and at last to 190 °C for 1-30 min so that a solution was obtained, wherein the PET was fully dissolved upon visual inspection. Subsequently, the solution was filtered (e.g. heated pressure filtration). As the filtrate started to cool-down polyethylene terephthalate (PET) precipitated. The precipitate was filtrated and washed with a small amount of GVL thereby obtaining a colour-depleted PET powder. For an easy removal of GVL and a faster drying process of the re-obtained colour-depleted PET powder, small amounts of acetone were optionally used in a second washing step. The thus obtained solid was dried (for example in a vacuum compartment dryer).

### Reference Example 1b: PET recycling with continuous heating

Colored polymeric PET material (in any colour) was cut/shredded into pieces and placed in a reaction vessel (e.g. flask, tube, reaction vessel). Degassed GVL was added (in mass-based ratio GVL:polymeric material 1:1 to 100:1, preferred 1:1-10:1) and the mixture was heated at 1013 mbar by use of a suitable heating system (e.g. oil bath, heating blocks, mini-plant vessels) to 185 °C so that a solution was obtained, wherein PET was fully dissolved upon visual inspection. After 1-30 min the mixture was filtered (e.g. heated pressure filtration), wherein undissolvable parts of filler, if present, which were insoluble in GVL were retained on the filter. As the filtrate started to cool-down the PET precipitated. The precipitate was filtrated, wherein dissolvable parts of filler, if present, which were soluble in GVL but did not precipitate during cooling, were removed with the filtrate. The precipitated PET was washed with a small amount of GVL. For an easy removal of GVL and a faster drying process of the re-obtained color depleted PET powder, small amounts of acetone were optionally used in a second washing step. The thus obtained solid was dried (for example in a vacuum compartment dryer).

### Reference Example 2: Separation of PET from Cotton and/or PA

Colored polymeric material (in any colour) comprising PET and Cotton and/or PA was cut/shredded into pieces and placed in a reaction vessel (e.g. flask, tube, reaction vessel). Degassed GVL was added (in mass-based ratio GVL:polymeric material 1:1 to 100:1, preferred 1:1-10:1) and the mixture was heated at 1013 mbar by use of a suitable heating system (e.g. oil bath, heating blocks, mini-plant vessels) to 185 °C so that a mixture was obtained, wherein PET was fully dissolved and dissolvable parts of filler, if present, were dissolved, but solid particles remained in the mixture. After 5-30 min the mixture was filtered (e.g. heated pressure filtration), whereby a filter cake with undissolved polymeric materials (Cotton and/or PA and undissolvable parts of filler, if present) and a filtrate with PET were obtained. The filter cake was optionally further washed with a small amount of hot GVL. As the filtrate started to cool-down the PET precipitated. The precipitate was filtrated, wherein the part of filler, if present, which was soluble in GVL but did not precipitate during cooling, was removed with the filtrate. The precipitated PET was washed with a small amount of GVL. For an easy removal of GVL and a faster drying process of the re-obtained colour-depleted PET powder, small amounts of acetone were optionally used in a second washing step. The filter cake was also washed with a small amount of GVL. For an easy removal of GVL and a faster drying process of the Cotton of PA pieces, small amounts of acetone were optionally used in a second washing step. The thus obtained polymeric materials (re-obtained PET and undissolved Cotton or PA) were dried (for example in a vacuum compartment dryer).

### Reference Example 3: Separation of Spandex and PET

Colored polymeric material (in any colour) comprising PET and Spandex was cut/shredded into pieces and placed in a reaction vessel (e.g. flask, tube, reaction vessel). Degassed GVL was added (in mass-based ratio GVL:polymeric material 1:1 to 100:1, preferred 1:1-10:1) and the mixture was heated at 1013 mbar by use of a suitable heating system (e.g. oil bath, heating blocks, mini-plant vessels) to 110-170°C so that a mixture was obtained, wherein Spandex was fully dissolved and PET remained unsolved. Parts of filler, if present, were also dissolved. After 0.1-4 h the mixture was filtered, whereby GVL enriched in Spandex and colorant and discolored PET pieces were obtained and the polymeric material pieces were washed with a small amount of GVL. For an easy removal of GVL and a faster drying process of the Spandex-free discolored PET pieces, small amounts of acetone were optionally used in a second washing step. The thus obtained polymeric material pieces were dried (for example in a vacuum compartment dryer).

For Reference Example 1a and all Reference Examples 1b-4 applies the following:
For recycling of the used solvent GVL, the filtrate was optionally distilled (50-200 °C, 2 hPa to ambient pressure, preferred 70-110 °C, 5-30 hPa) to obtain distilled GVL having a purity according to GC of > 99 % area%. For GLV, the Hazen color index was determined before treatment and after distillation. The distilled GVL as well as non-distilled GVL could be re-used under the same conditions as fresh GVL.

### Reference Example 4: PBT recycling with continuous heating

Colored polymeric PBT material (in any colour) was cut/shredded into pieces and placed in a reaction vessel (e.g. flask, tube, reaction vessel). Degassed GVL was added (in mass-based ratio GVL:polymeric material 1:1 to 100:1, preferred 1:1-10:1) and the mixture was heated at 1013 mbar by use of a suitable heating system (e.g. oil bath, heating blocks, mini-plant vessels) to 185 °C so that a mixture was obtained, wherein PBT, and dissolved parts of filler, if present, was/were fully dissolved but solid particles remained in the mixture. After 5-30 min the mixture was filtered (e.g. heated pressure filtration), whereby a filter cake with remaining parts of undissolved fillers (e.g. glass fiber) and a filtrate with PBT and dissolved parts of filler, if present, were obtained. The filter cake was optionally further washed with a small amount of hot GVL. As the filtrate started to cool-down the PBT precipitated. The precipitate was filtrated, wherein dissolved parts of filler, if present, which were soluble in GVL but did not precipitate during cooling, were removed with the filtrate. The precipitated PBT was washed with a small amount of GVL. For an easy removal of GVL and a faster drying process of the re-obtained colour-depleted PBT powder, small amounts of acetone were optionally used in a second washing step. The filter cake was also washed with a small amount of GVL. For an easy removal of GVL and a faster drying process of the undissolved fillers (e.g glass fiber), small amounts of acetone were optionally used in a second washing step. The thus obtained polymeric materials and fillers (re-obtained PBT and undissolved glass fiber) were dried (for example in a vacuum compartment dryer).

### Examples 1 to 3 (E1-E3) and Comparative Examples 1 to 4 (C1-C4): PET recycling

Colored polymeric PET materials were treated as described in Reference Example 1a or Reference Example 1b, wherein type of polymeric material and experimental conditions, as well as results are indicated in Table 1. The samples were analysed before treatment ((colored) polymeric material, Table 1) and after the final drying step (recycled and re-obtained colour-depleted PET solid, Table 2) in that number average molecular weight Mn, mass average molecular weight Mw, dispersity Mw/Mn, and quantitative 1H-NMR, were determined.

**Table 1.**

| Analytic of starting PET materials. | | | | |
|---|---|---|---|---|
| | GPC | | | NMR |
| Textile colour | Number average molecular weight Mn [g/mol] | Mass average molecular weight Mw [g/mol] | Dispersity Mw/Mn | q¹H NMR [g/100g] |
| Green | 16 900 | 45 100 | 2.7 | 99.6 ± 1.0 |
| White | 13 700 | 48 300 | 3.5 | 98.5 ± 1.0 |

The white textile had, based on X-ray fluorescence analysis, a titanium content of 0.1-1 weight-% and contained each of Si, S, Cl, K, Ca, Fe, Sb in < 0.1 weight-%. The white textile had an intrinsic viscosity [η] in [100 ml/g] of 0.501.

**Table 2.**

| Experimental results for PET Recycling. | | | | | | | | |
|---|---|---|---|---|---|---|---|---|
| | | | GPC | | | NMR | | |
| (Comparative) Example No. | Coloured Textile as Starting material | Process conditions | Number average molecular weight Mn [g/mol] | Mass average molecular weight Mw [g/mol] | Dispersity Mw/Mn | q¹H NMR [g/100g ] | X-ray fluorescence | Intrinsic viscosity [· ] in [100 ml/g] |
| C1 | Green | 5 g/50g = 1:10 (PET:GVL) Procedure according to Reference Example 1a (1) 30 min, 120 °C; (2) 30 min, 170 °C; (3) 30 min, 180 °C; (4) 30 min, 190 °C. | 18 800 (increase ratio: 11.3%) | 44 100 (degradation ratio: 2.2%) | 2.3 | 99.6 ± 1.0 GVL: 0.43 ± 1.0 | | |
| C2 | Green | 5 g/100g = 1:20 (PET:GVL) Procedure according to Reference Example 1a (1) 30 min, 120 °C; (2) 30 min, 170 °C; (3) 30 min, 180 °C; (4) 30 min, 190 °C. | 17 900 (increase ratio: 5.9%) | 43 500 (degradation ratio: 3.5%) | 2.4 | 96.6 ± 1.0 GVL: 3.64 ± 1.0 | | |
| C3 | White | 10 g/80 g = 1:8 (PET:GVL) | 18 300 (increase ratio: 33.6%) | 47 400 (degradation | 2.6 | - | | |
| | | Procedure according to Reference Example 1a (1) 30 min, 120 °C; (2) 30 min, 170 °C; (3) 30 min, 180 °C; (4) 30 min, 190 °C. | | ratio: 1.9%) | | | | |
| C4 | White | 15 g/150 g = 1:10 (PET:GVL) Procedure according to Reference Example 1a (1) 30 min, 120 °C; (2) 30 min, 170 °C; (3) 30 min, 180 °C; (4) 30 min, 190 °C. | 19 700 (increase ratio: 43.8%) | 47 600 (degradation ratio: 1.4%) | 2.4 | - | | |
| E1 | Product from Comparative Example No. C4 | 10 g/100 g = 1:10 (PET:GVL) **Procedure according to Reference Example 1b 10 min, 185°C** | 19 900 (increase ratio: 45%) | 46 600 (degradation ratio: 2.1%) | 2.3 | - | Si, Ti, Ni each <0.1 weigh t-% | |
| E2* | White | 10 g/100 g = 1:10 (PET:GVL) | 19 700 (increase ratio: 43.8%) | 48 500 (increase ratio: 0.41%) | 2.5 | 96.5 ± 1.0 | | |
| | | **Procedure according to Reference Example 1b 15 min, 185°C** | | | | GVL: 2.32 ± 1.0 | | |
| E3** | White | 10 g/100 g = 1:10 (PET:GVL) **Procedure according to Reference Example 1b^{[a]} 15 min, 185°C** | 20 300 (increase ratio: 48.2%) | 48 800 (increase ratio: 1.04%) | 2.4 | 98.4 ± 1.0 GVL: 0.51 ± 1.0 | | 0.511 |

| | | | | | | | | |
|---|---|---|---|---|---|---|---|---|
| [a] Drying at 140 °C in vacuum drying oven instead of 80 °C. * CIE-LAB values: L* = 82.4, a* = -0.8, b* = 1.6 ** CIE-LAB values: L* = 84.4, a* = -0.8, b* = 2.3 | | | | | | | | |

It was apparent that using a continuous heating procedure according to Reference Example 1b resulted not only in a stop of decrease regarding the Mass average molecular weight Mw but also the number average molecular weight Mn increased.

The X-ray fluorescence results for the white textile in Example E1 showed that the amounts of Si, Ti, Ni were considerably reduced (<0.1%) and the amounts of other elements such as S, Cl, K, Ca, Fe, Sb were reduced below the detection limit. This proved that the fillers were removed by this method (compared to the starting material green textile). The intrinsic viscosity data obtained for Example E3 showed that a decrease in intrinsic viscosity could be avoided with this method (compared to starting material white textile).

### Examples 4, 5 and 6 (E4, E5, E6): Separation of PET from Cotton or PA

Colored polymeric materials (in any colour) were treated as described in Reference Example 2, wherein type of polymeric material and experimental conditions, as well as results are indicated in Tables 3 and 4.

The samples were analysed before treatment ((colored) polymeric material, Table 3 and 4) and after the final drying step (recycled and re-obtained colour-depleted PET solid and undissolved polymer (Cotton or PA), Table 3 and 4) in that a quantitative 1H-NMR was measured to determine the PET content in case of Cotton/PET separation and to determine the PA and PET content in case of PA/PET separation.

**Table 3.**

| Experimental results for PET/Cotton separation. | | | | |
|---|---|---|---|---|
| | | | | NMR |
| Example No. | Comment | Process conditions | Description of fractions | PET content by q¹H NMR [g/100g] |
| --- | Olive green blend of PET/Cotton | Starting material | 10 g | 53.3 ± 1.0 |
| E4 | Separation of PET/Cotton | 10 g/100g = 1:10 (PET/Cotton:GVL) | (1) Filter cake = Cotton | (1) No PET content |
| | | Procedure according to Reference Example 2 | (2) Precipitate of filtrate = PET | (2) 98.7 ± 1.0 (GVL: 0.21 ± 0.1) No cotton |
| | | 30 min, 185°C | | |
| --- | Multi-colored blend of PET/Cotton | Starting material (80:20, Cotton:PET) | 15 g | |
| E5 | Separation of PET/Cotton | 15 g/150g = 1:10 (PET/Cotton:GVL) | (1) Filter cake = Cotton | (1) no PET content |
| | | Procedure according to Reference Example 2 | (2) Precipitate of filtrate = PET | → complete separation of cotton and PET |
| | | 30 min, 185°C | | |

**Table 4.**

| Experimental results for PET/PA separation. | | | |
|---|---|---|---|
| | | | Mass |
| Example No. | Comment | Process conditions | Weighed with balance |
| --- | Artificially mix of white PET sample and white PA sample | Starting material | 5 g of PET |
| | | | 5 g of PA |
| E6 | Separation of PET/PA | 10 g/100g = 1:10 (PET/PA:GVL) | (1) Filter cake = PA |
| | | Procedure according to Reference Example 2 | (2) Precipitate of filtrate = PET: 4.9 g |
| | | 30min, 185°C | |

It was shown that the separation worked quite effectively (complete separation could be achieved), especially did the PET obtained not have residues of PA or cotton (E4, > 98% PET) and almost all PET (at least 98%), which had been comprised in the starting material, could be recovered.

### Example 7 (E7): Separation of Spandex and PET

Colored polymeric materials (in any colour) were treated as described in Reference Example 3, wherein type of polymeric material and experimental conditions, as well as results are indicated in Table 5. The samples were analysed before treatment ((colored) polymeric material, Table 5) and after the final drying step (polymeric material depleted of colorant and Spandex, Table 5) in that a quantitative 1 H-NMR was measured to determine the PET content.

**Table 5.**

| Experimental results for PET/Spandex separation. | | | | |
|---|---|---|---|---|
| | | | Mass | NMR |
| Example No. | Comment | Process conditions | Weighed with balance | PET content by q¹H NMR [g/100g] |
| --- | Black, purple, pink, white beach fashion comprising PET and Spandex | Starting material | 10 g | 81.3 ± 1.0 |
| E7 | Separation of PET/Spandex | 10 g/100g = 1:10 (PET/Spandex:GVL) | 8.2 g re-obtained PET | 98.2 ± 1.0 |
| | | | | GVL: 0.43 ± 1.0 |
| | | Procedure according to Reference Example 3 | | |
| | | 4 h, 120 °C | | |

It was apparent that using a procedure according to Reference Example 3 resulted in an almost complete recovery of the PET contained in the initial PET/Spandex blend and the PET obtained was completely Spandex-free.

### Examples 8 (E8a, 8b): Separation of Spandex, PET and Viscose

A polymer blend comprising Spandex/PET/Viscose was subsequently treated according to the procedures of Reference Example 3 and Reference Example 2. Details and results are shown in Table 6.

**Table 6.**

| Experimental results for PET/Viscose/Spandex separation. | | | | |
|---|---|---|---|---|
| | | | Mass | NMR |
| Example No. | Comment | Process conditions | Weighed with balance | PET content by q¹H NMR [g/100g] |
| --- | Multi-colored textile containing: Black, red, yellow, white, comprising PET/Viscose/Spandex | Starting material | 15 g | not determined |
| E8a | Separation of Spandex from PET/Viscose | 15 g/150g = 1:10 (PET/Viscose/Spandex:GVL) | 14.4 g re-obtained material containing PET and Viscose | 67.3 ± 1.0 |
| | | Procedure according to Reference Example 3 4 h, 150 °C | | |
| E8b | Separation of PET from Viscose | 12 g of re-obtained material from E8a | (1) Filter cake = Viscose | (1) No PET content in viscose fraction |
| | Starting material as obtained from Example E8a | | (2) Precipitate of filtrate = PET: 8.0 g | (2) 99.3 ± 1.0 GVL: 0.21 ± 1.0 No Viscose |
| | | 12 g/120g = 1:10 (PET/Viscose:GVL) | | |
| | | Procedure according to Reference Example 2 30 min, 185°C | | |

Examples 8a and 8b show the stepwise process of separating different polymers from each other. After separation of Spandex the remaining material containing PET and Viscose contained 67.3 g PET. From this material 12 g were treated according to Reference Example 2 and delivered 8.0 PET (which is exactly 67.3 % of 12 g) with a purity of 99.3%. Thus, a selective separation of PET and Viscose could be achieved.

### Example 9 (E9): PBT recycling

Colored polymeric PBT materials were treated as described in Reference Example 4, wherein type of polymeric material and experimental conditions, as well as results are indicated in Table 7. The sample was analysed before treatment ((colored) polymeric material, Table 1) and after the final drying step (recycled and re-obtained colour-depleted PBT solid, Table 7) in that number average molecular weight Mn, mass average molecular weight Mw, dispersity Mw/Mn were determined.

**Table 7.**

| Experimental results for PBT recycling and separation of fillers. | | | | | | |
|---|---|---|---|---|---|---|
| | | | GPC | | | Elemental analysis |
| Example No. | Comment | Process conditions | Number average molecular weight Mn [g/mol] | Mass average molecular weight Mw [g/mol] | Dispersity Mw/Mn | |
| --- | Black material PBT with 30% glass fiber | Starting material | 21 000 | 53 900 | 2.6 | not determined |
| E9 | Recycling of PBT and separation of glass fiber | 10 g/100g = 1:10 (PBT/Glass fiber:GVL) | 23 100 (increase ratio: 10%) | 53 600 (degradation ratio: 0.6%) | 2.3 | < 100 ppm Si |
| | | Procedure according to Reference Example 4 15 min, 185°C | | | | |

It was apparent that using a procedure for dissolving the PBT according to Reference Example 4 resulted at least in a stop of decrease regarding the Mass average molecular weight Mw - the degradation ratio was very low, below 1%. Also the number average molecular weight Mn increased. The re-obtained PBT was glass-fiber free thus a complete separation could be achieved.

### Comparative Examples 5 and 6 (C5, C6): other solvents

Colored polymeric materials (in any colour) were treated as described in Reference Example 1b with the difference that another solvent was used instead of GVL. The polymeric material was the white textile as described in Table 1. Experimental conditions, as well as results are indicated in Table 8.

**Table 8.**

| Comparative examples using known PET Recycling solvents. | | | | | | |
|---|---|---|---|---|---|---|
| | | | | GPC-HPLC | | |
| Comparative Example No. | Textile Colour as Starting material | Process conditions | Comments | Number average Mn [g/mol] | Mass average Mw [g/mol] | Dispersity Mw/Mn |
| C5 | White | 10 g/100g = 1:10 (PET:DMI) | DMI as solvent instead of GVL-Precipitation of PET from DMI inefficient and yield of re-obtained PET is lower | 19 400 (increase ratio: 42%) | 40 500 (degradation ratio: 16.2%) | 2.1 |
| | | Procedure similar to Reference Example 1b 15 min, 185°C | | | | |
| C6 | White | 10 g/100g = 1:10 (PET:**Ethyl benzoate**) Procedure similar to Reference Example 1b 15 min, 185°C | Ethyl benzoate as solvent instead of GVL. 9.4 g of PET did not dissolve in solvent. Only 0.3 g re-obtained PET with bad quality | 7 650 (degradation ratio: 44.2%) | 22 500 (degradation ratio: 53.4%) | 2.9 |

It was apparent that using DMI or Ethyl benzoate as solvent, under the same conditions as GVL, the re-obtained PET lacked in quality. By using DMI (C5), PET did not precipitate readily from the solvent and also the re-obtained PET had a lower yield. Further, the degradation ratio of PET increased majorly compared to the usage of GVL. In ethyl benzoate (C6) the PET did not really dissolve (94% of undissolved PET could be re-isolated after filtration as filter cake) and only a very small amount of PET was isolated upon hot filtration and precipitation. The re-obtained PET had a bad quality.

### Comparative Example 7 (C7): Reproduction of procedure of state of the art

A method for dissolution/precipitation of PET is disclosed in Wenjun Chen et al. (Wenjun Chen et al.: "Biomass-derived [gamma]-valerolactone: efficient dissolution and accelerated alkaline hydrolysis of polyethylene terephthalate", Green Chemistry, vol. 23, no. 11, 9 June 2021, pages 4065-4073), see especially section *"PET recycled by dissolution*/*precipitation method" on* page 4071 and the additional information regarding the time required for dissolution in Table 2 on page 4068 and on page 4067, right column.

A sample of the white PET textile material used was initially analyzed with respect to number average weight (Mn), mass average weight (Mw), dispersity (Mw/Mn), as well with respect to its CIE-LAB characteristics; the analytic results are indicated below in Table 9.

For comparative purposes, it was tried to reproduce the experiment of Wenjun Chen et al. with a swelling at 120 °C or 1 hour and a dissolution at 170 °C within 2 minutes: 10 g flakes of the white PET textile were placed in a reaction vessel. Side note: Wenjun Chen et al. did their experiment with flakes from PET bottles, whereas here, flakes from a PET textile were used. However, it was known that PET behaves the same, irrespective of the original form (bottle, textile). 200 g degassed GVL were added (in mass-based ratio GVL: PET polymeric material 20:1) and the mixture was kept at 120°C (at 1013 mbar) for one hour. After that, the temperature was increased to 170 °C and kept at this temperature for 5 minutes - only partly dissolution was observed, i.e. solid material remained visible. Then, the mixture was hot filtered and water was added (anti-solvent) to the liquid phase after filtration in a mass-based ratio water:polymeric material 20:1 at 80 °C. As a result of the filtration, a large portion of 8.5 g of undissolved PET polymeric material was recovered on the filter (85% of the initial PET textile flakes), and 1.3 g of PET were recovered as precipitate from the liquid fraction after water addition (13% of the initial PET textile flakes). The precipitate obtained was analyzed, the results are indicated in Table 9 below.

For comparison, 10 g flakes of the same white PET textile were treated according to Reference Example 1b at 185 °C for 15 minutes, mass-based ratio PET:GVL = 1:10, wherein a complete dissolution of the PET flakes was observed. After filtration, precipitation was achieved by cooling, i.e. without addition of anti-solvent. The precipitate obtained was analyzed, the results are indicated in Table 9 below.

**Table 9**

| Analytic results for precipitate obtained by method of Wenjun Chen et al. in comparison to method according to Reference Example 1b. | | | | | |
|---|---|---|---|---|---|
| | Dissolution* | Number Average weight Mn [g/mol] | Mass average weight Mw [g/mol] | Dispersity Mw/Mn | CIE-LAB L*a*b* |
| Untreated white PET textile flakes | --- | 18 000 | 53 200 | 3.0 | L* = 91 |
| | | | | | a* = -1 |
| | | | | | b* = 1 |
| Precipitate obtained from white | Complete dissolution | 22 200 | 52 200 | 2.3 | L* = 91 |
| | | | | | a* = -1 |
| PET textile flakes treated according to Reference example 1b | | | | | b* = 2 |
| C7: Precipitate obtained from white PET textile flakes treated according to Wenjun Chen et al. | Only partial dissolution - 85% undissolved | 9 330 | 37 900 | 4.1 | L* = 82 |
| | | | | | a* = 0 |
| | | | | | b* = 9 |

| | | | | | |
|---|---|---|---|---|---|
| *"dissolution" refers to the state achieved by treatment with GVL for the respective time and at the respective temperature, i.e. before filtration and precipitation. | | | | | |

First, it had to be noted that contrary to what was said in Wenjun Chen et al., the PET textile flakes, even if a so called "swelling" at 120 °C was conducted for 1 hour, could not be dissolved in 2 minutes in large parts - 85% of the initially provided PET textile flakes remained undissolved, despite the fact that the treatment step at 170 °C was extended to five minutes. On the other hand, the procedure according to Reference Example 1b gave a complete dissolution of the material and a complete recovery in the precipitate.

Second, using the procedure according to Reference Example 1b resulted not only in a stop of decrease regarding the mass average molecular weight Mw but also the number average molecular weight Mn increased. On the contrary, the procedure of Wenjun Chen et al. resulted in major decrease of Mn and of Mw.

Third, the CIE-LAB L*a*b* values showed that the recovered PET obtained according to the procedure of Reference Example 1b was significantly whiter (higher L* value) compared to the material obtained with the method described in Wenjun Chen et al. - the recovered PET obtained according to the procedure of Reference Example 1b was as white as the initial "white" PET material, whereas the recovered PET obtained according to the procedure of Wenjun Chen et al. showed a remarkable yellow coloring.

### Cited Literature

- WO 2016/12755 A1
- Wenjun Chen, Yuechao Yang, Xue Lan, Baolong Zhang, Xiaogang Zhang and Tiancheng Mu in Green Chem., vol. 23, no. 11, 9. June 2021, 23, pages 4065-4073"Dyes and Pigments" Metin Agikyildiz, Kübra Günes, Ahmet Gürses Springer, 2016 (ISBN: 10 : 3319338900)
- Industrial Organic Pigments - Klaus Hunger, Thomas Heber, Martin U. Schmidt, Friedrich Reisinger, Stefan Wanne Wiley-VCH, 4th edition, 2018 (ISBN: 978-3-527-32608-2)
- Chemistry and Technology of Natural and Synthetic Dyes and Pigments - Ashis Kumar Samanta, Nasser Awwad, IntechOpen, 2020 (ISBN: 9781789859980, 9781789859973, 9781839687587)
- Encyclopedia of Color, Dyes, Pigments - Volume 1, Gerhard Pfaff, de Gruyter, 2021 (ISBN: 311058588X)
- Heinrich Zollinger: Color Chemistry: Syntheses, Properties, and Applications of Organic Dyes and Pigments. 3rd edition. WILEY-VCH Verlag, Weinheim 2003 (ISBN: 3-906390-23-3)
- Klaus Hunger (Ed.): Industrial Dyes: Chemistry, Properties, Applications. WILEY-VCH Verlag, Weinheim 2003 (ISBN: 3-662-01950-7)
- Hermann Rath: Lehrbuch der Textilchemie. einschl. der textilchemischen Technologie. 2nd edition. Springer-Verlag, Berlin, Heidelberg 1963 (ISBN: 978-3-662-00065-6)
- Wilfried Kratzert, Rasmus Peichert: Farbstoffe. Quelle & Meyer, Heidelberg 1981 (ISBN: 3-494-01021-8)
- Ullmann's Encyclopedia of industrial chemistry, Wiley-VCH, 2000, sections "dyes and pigments" and "dyes, general survey" (ISBN: 9783527303854).
- Handbuch der mechanischen Fest-Flüssig-Trennung Taschenbuch - 29. April 2004 von Klaus Luckert (Herausgeber)
- W.-M. Kulicke and C. Clasen, Viscosimetry of Polymers and Polyelectrolytes, Springer (2003)
- US 2017/218162 A1
- WO 2022/229129 A1 (Art. 54(3) EPC document)

## Claims

1. A method for separating a polymer blend, which comprises
i) a polyester and
ii) one or more component(s) selected from the group consisting of a second polymer, a third polymer and a filler, wherein second polymer and third polymer are different from each other and different from the polyester of i);
the method comprising:
a) providing the polymer blend and providing a solvent comprising gamma-valerolactone;
b) contacting the polymer blend with the solvent comprising gamma-valerolactone at a temperature T1 of < 170 °C, thereby obtaining a solvent, which is enriched in dissolved second polymer and a residue of the polymer blend, which is depleted of said second polymer and comprises the polyester, optionally the third polymer and optionally the filler;
and
c) optionally contacting the residue of the polymer blend obtained in b.2) with a solvent comprising gamma-valerolactone at a temperature T2 of > 170 °C, thereby obtaining a solvent, which is enriched in dissolved polyester compared to the solvent provided in a) and comprises optionally at least a part of the filler, and optionally a residue of the polymer blend, which is depleted of polyester and comprises optionally the third polymer and optionally the filler or a part of the filler;
wherein b) comprises:
b.1) contacting the polymer blend with the solvent comprising gamma-valerolactone at a temperature T1 of < 170 °C, thereby obtaining a solvent, which is enriched in dissolved second polymer and a residue of the polymer blend, which is depleted of said second polymer and comprises the polyester, optionally the third polymer and optionally the filler;
b.2) separating the solvent, which is enriched in dissolved second polymer and the residue of the polymer blend obtained in b.1), preferably by a physical separation method, thereby obtaining a separated solvent, which is enriched in dissolved second polymer compared to the solvent provided in a) and the residue of the polymer blend, which is depleted of said second polymer and comprises the polyester.

2. The method for separating a polymer blend of claim 1, wherein c) comprises:
c.1) contacting the polymer blend provided in a) or the residue of the polymer blend obtained in b) or b.2) with a solvent comprising gamma-valerolactone and having a temperature T1a, which is ≤ T2 (T2 being a temperature of > 170 °C), thereby obtaining a mixture comprising the polymer blend and the solvent;
c.2) heating the mixture obtained in c.1) to a temperature T2 of > 170 °C with a continuous heating, wherein the heating from T1a to T2 is preferably done with a heating rate in the range of from 20 K/h to 1000 K/h, 25 K/h to 900 K/h, 30 K/h to 800 K/h, 40 K/h to 700 K/h, 60 K/h to 600 K/h, preferably maintaining T2, thereby obtaining a solvent, which is enriched in dissolved polyester compared to the solvent provided in (a) and which optionally comprises at least a part of the filler; and optionally a residue of the polymer blend, which is depleted of polyester and comprises the third polymer and optionally the filler or a part of the filler;
c.3) separating the solvent, which is enriched in dissolved polyester obtained in c.2) from the residue of the polymer blend, wherein the separation is preferably done by heated filtration, more preferably by heated filtration at a temperature T3 in the range of from T2 minus 20 °C to T2 plus 20 °C (T3 = T2 ± 20°C), more preferably at a temperature T3 in the range of from T2 minus 10 °C to T2 plus 10 °C (T3 = T2 ± 10°C);
wherein the method preferably further comprises:
c.4) contacting the residue of the polymer blend obtained in c.3), if it comprises a remaining amount of the polyester, with solvent comprising gamma-valerolactone, preferably at a temperature T3 as defined above, followed by filtration, thereby obtaining a residue of the polymer blend, which is further depleted of polyester and comprises the third polymer and optionally the filler or a part of the filler; and a solvent, which contains the remaining amount of the polyester.

3. The method for separating a polymer blend of claim 2, wherein if T1a is below 120°C, the heating is done with a continuous heating, preferably with a heating rate in the range of from 20 K/h to 1000 K/h, 25 /K/h to 900 K/h, 30 K/h to 800 K/h, 40 K/h to 700 K/h, 60 K/h to 600 K/h, preferably the heating is done so that the mixture obtained in c.1) is in the temperature range of 110-130 °C for less than 60 minutes, preferably for less than 50 minutes, more preferably for less than 40 minutes, more preferably for less than 30 minutes, more preferably for less than 20 minutes, or, if T1a is above 120°C, the heating is done with a continuous heating, preferably with a heating rate in the range of from 0.1 to 1000 K/h, more preferably in the range of from 5 to 500 K/h, more preferably in the range of from 25 to 300 K/h.

4. The method for separating a polymer blend of any one of claims 1 to 3 comprising:
d) cooling the solvent obtained in c) or c.3), which is enriched in dissolved polyester compared to the solvent provided in a) and which optionally comprises at least a part of the filler, to a temperature below 170°C, preferably below 150°C, more preferably below 140°C, more preferably below 100°C, thereby obtaining a precipitated polyester and a solvent, which is depleted in dissolved polyester and which optionally comprises at least a part of the filler;
e) optionally separating the precipitated polyester obtained in d) from the solvent, which is depleted in dissolved polyester, thereby obtaining a precipitated polyester and the solvent, which is depleted in dissolved polyester and which optionally comprises at least a part of the filler;
wherein preferably the method for separating a polymer blend further comprises:
f) optionally washing the precipitated polyester obtained in e);
g) optionally drying the precipitated polyester obtained in e) or the washed precipitated polyester obtained in f).

5. The method for separating a polymer blend of any one of claims 1 to 4 comprising recycling the separated solvent obtained in b.2) and/or the separated solvent obtained in e) at least partially to b) and/or c), optionally after one or more work-up step(s).

6. The method for separating a polymer blend of any one of claims 1 to 5, wherein T1 is a temperature in the range of from 110 to < 170°C, preferably a temperature in the range of from 110 to 165 °C, more preferably a temperature in the range of from 120 to 150 °C and/or
wherein T2 is a temperature in the range of from > 170°C to 200 °C, preferably a temperature in the range of from 175 to 190 °C, more preferably a temperature in the range of from 180 to 190 °C.

7. The method for separating a polymer blend of any one of claims 1 to 6, wherein the polyester according to i) is selected from the group consisting of a polymer based on 1,4-butanediol and terephthalic acid (polybutylene terephthalate, PBT), a polymer based on 1,2-ethanediol and terephthalic acid (polyethylene terephthalate, PET), a copolymer of 1,4-butanediol, adipic acid and terephthalic acid (polybutylenadipat-terephthalat, PBAT), a polymer of 1,2-ethanediol and 2,5-furandicarboxylic acid (polyethylene furanoate, PEF) and mixtures of two or more of these (co)polymers, preferably the polyester according to i) is a polymer based on 1,4-butanediol and terephthalic acid (PBT) or a polymer based on 1,2-ethanediol and terephthalic acid (PET).

8. The method for separating a polymer blend of any one of claims 1 to 5, wherein the second polymer is preferably selected from the group consisting of polyurethane (PU), polyethylene glycol (PEG), polytetrahydrofuran (pTHF), mixtures of these polymers and copolymers of these polymers, wherein the second polymer is more preferably a copolymer of PU and PEG and/or pTHF, more preferably spandex (copolymer of PU and PEG or of PU and pTHF).

9. The method for separating a polymer blend of any one of claims 1 to 8, wherein the third polymer is preferably selected from the group consisting of polyolefins, preferably polyethylene (PE) and polypropylene (PP), polyamide (PA), natural polymer, preferably wool, cotton or viscose, mixtures of two or more of these polymers and copolymers of two or more of these polymers, wherein the third polymer is preferably selected from PA, wool, cotton, viscose and mixtures of two or more of these polymers.

10. The method for separating a polymer blend of any one of claims 1 to 9, wherein the solvent comprising gamma-valerolactone comprises gamma-valerolactone and one or more solvent(s) selected from the group consisting of water and organic solvents having a log K_{OW} in the range of from -1.6 to +1.6, preferably selected from the group consisting of water, C5 to C12 alkane, aliphatic C1 to C10 alcohol, C3 to C10 ketone, C2 to C10 cyclic ketone, HO-[C1 to C10 alkyl-O-]ₙ-H, with n being an integer in the range of from 2 to 1000, C1 to C10 alkyl-O-C3 to C10 alkyl ether, C3 to C10 cyclic ether, optionally substituted with one or more C1 to C6 alkyl group(s), C6 to C10 aromatic hydrocarbon, optionally substituted with one or more C1 to C6 alkyl group(s), C2 to C10 aliphatic ester, C8 to C11 aromatic ester, C5 to C10 cyclic carboxylic ester (lactone), C3 to C12 amide, preferably R¹R²N-C(=O)-R³, wherein R¹, R² are independently a C1 to C4 alkyl group and R³ is selected from the group consisting of C1 to C9 alkyl group, C1 to C10 ester group and C1 to C6 ether group, C3 to C6 lactame, optionally substituted with one or more substituent selected from C1 to C6 alkyl group, C1 to C6 ester group and C1 to C6 ether group, and C5 imidazolidine, optionally substituted with one or more C1 to C6 alkyl group(s), C5 to C7 imidazolidone, optionally substituted with one or more C1 to C6 alkyl group(s).

11. A method according to any one of claims 4 to 10 comprising
I) providing a polyester obtained by method step d) and/or e) and/or f) and/or g) according to claim 4;
II) preparing a textile, a fiber, a packaging, a plastic, an automotive part, an electronic part from the polyester provided in I).

12. The method according to claim 11 wherein a food packaging, a beverage packaging, a clothing, foot wear, a wire, a cable is prepared in II), wherein preferably in case that the polyester is selected from PBAT, PEF and PET, preferably PET, a textile application, a fiber application, a packaging application, a plastic application, more preferably a food packaging, a beverage packaging, a clothing and foot wear is prepared in II); wherein in case that the polyester is PBT, a textile application, an automotive application, or an electronic application, more preferably a wire and/or a cable is prepared in II).

## Patentansprüche

1. Ein Verfahren zur Trennung einer Polymermischung, die umfasst
i) einen Polyester und
ii) eine oder mehrere Komponente(n), ausgewählt aus der Gruppe bestehend aus einem zweiten Polymer, einem dritten Polymer und einem Füllstoff, wobei das zweite Polymer und das dritte Polymer voneinander und vom Polyester gemäß i) verschieden sind;
wobei das Verfahren umfasst:
a) Bereitstellen der Polymermischung und Bereitstellen eines Lösungsmittels, das gamma-Valerolac-
ton umfasst;
b) Inkontaktbringen der Polymermischung mit dem Lösungsmittel, das gamma-Valerolacton umfasst, bei einer Temperatur T1 von < 170 °C, wodurch ein Lösungsmittel erhalten wird, das an gelöstem zweiten Polymer angereichert ist, und ein Rückstand der Polymermischung, der an dem genannten zweiten Polymer abgereichert ist und den Polyester, optional das dritte Polymer und optional den Füllstoff umfasst;
und
c) optionales Inkontaktbringen des in b.2) erhaltenen Rückstands der Polymermischung mit einem Lösungsmittel, das gamma-Valerolacton umfasst, bei einer Temperatur T2 von > 170 °C, wodurch ein Lösungsmittel erhalten wird, das im Vergleich zu dem in a) bereitgestellten Lösungsmittel an gelöstem Polyester angereichert ist
und optional mindestens einen Teil des Füllstoffs umfasst, und optional ein Rückstand der Polymermischung, der an Polyester abgereichert ist und optional das dritte Polymer und optional den Füllstoff oder einen Teil des Füllstoffs umfasst;
wobei b) umfasst:
b.1) Inkontaktbringen der Polymermischung mit dem Lösungsmittel, das gamma-Valerolacton umfasst, bei einer
Temperatur T1 von < 170 °C, wodurch ein Lösungsmittel erhalten wird, das an gelöstem zweiten Polymer angereichert ist, und ein Rückstand der Polymermischung, der an dem genannten zweiten Polymer abgereichert ist und den Polyester, optional das dritte Polymer und optional den Füllstoff umfasst;
b.2) Trennen des Lösungsmittels, das an gelöstem zweiten Polymer angereichert ist, und des Rück- stands der in b.1) erhaltenen Polymermischung, vorzugsweise durch ein physikalisches Trennverfahren, wodurch ein abgetrenntes Lösungsmittel erhalten wird, das im Vergleich zu dem in a) bereitgestellten Lösungsmittel an gelöstem zweiten Polymer angereichert ist, und der Rückstand der Polymermischung, der an dem genannten zweiten Polymer abgereichert ist und den Polyester umfasst.

2. Das Verfahren zur Trennung einer Polymermischung nach Anspruch 1, wobei c) umfasst:
c.1) Inkontaktbringen der in a) bereitgestellten Polymermischung oder des in b) oder b.2) erhaltenen Rückstands der Polymermischung mit einem Lösungsmittel, das gamma-Valerolacton umfasst und eine Temperatur T1a aufweist, die ≤ T2 ist (T2 ist eine Temperatur von > 170 °C), wodurch eine Mischung erhalten wird, die die Polymermischung und das Lösungsmittel umfasst;
c.2) Erhitzen der in c.1) erhaltenen Mischung auf eine Temperatur T2 von > 170 °C mit kontinuierlichem Erhitzen, wobei das Erhitzen von T1a auf T2 vorzugsweise mit einer Heizrate im Bereich von 20 K/h bis 1000 K/h, 25 K/h bis 900 K/h, 30 K/h bis 800 K/h, 40 K/h bis 700 K/h, 60 K/h bis 600 K/h erfolgt, wobei T2 vorzugsweise aufrechterhalten wird, wodurch ein Lösungsmittel erhalten wird, das im Vergleich zu dem in
(a) bereitgestellten Lösungsmittel an gelöstem Polyester angereichert ist und optional mindestens einen Teil des Füllstoffs umfasst; und optional ein Rückstand der Polymermischung, der an Polyester abgereichert ist und das dritte Polymer und optional den Füllstoff oder einen Teil des Füllstoffs umfasst;
c.3) Trennen des in c.2) erhaltenen, an gelöstem Polyester angereicherten Lösungsmittels vom Rückstand der Polymermischung, wobei die Trennung vorzugsweise durch Heißfiltration erfolgt, bevorzugter durch Heißfiltration bei einer Temperatur T3 im Bereich von T2 minus 20 °C bis T2 plus 20 °C (T3 = T2 ± 20 °C), bevorzugter bei einer Temperatur T3 im Bereich von T2 minus 10 °C bis T2 plus 10 °C (T3 = T2 ± 10 °C);
wobei das Verfahren vorzugsweise ferner umfasst:
c.4) Inkontaktbringen des in c.3) erhaltenen Rückstands der Polymermischung, falls er eine verbleibende Menge des Polyesters umfasst, mit einem Lösungsmittel, das gamma-Valerolacton umfasst, vorzugsweise bei einer Temperatur T3 wie oben definiert, gefolgt von Filtration, wodurch ein Rückstand der Polymermischung erhalten wird, der weiter an Polyester abgereichert ist und das dritte Polymer und optional den Füllstoff oder einen Teil des Füllstoffs umfasst; und ein Lösungsmittel, das die verbleibende Menge des Polyesters enthält.

3. Das Verfahren zur Trennung einer Polymermischung nach Anspruch 2, wobei, wenn T1a unter 120°C liegt, das Erhitzen mit kontinuierlichem Erhitzen erfolgt, vorzugsweise mit einer Heizrate im Bereich von 20 K/h bis 1000 K/h, 25 K/h bis 900 K/h, 30 K/h bis 800 K/h, 40 K/h bis 700 K/h, 60 K/h bis 600 K/h, wobei das Erhitzen vorzugsweise so erfolgt, dass sich die in c.1) erhaltene Mischung weniger als 60 Minuten, vorzugsweise weniger als 50 Minuten, bevorzugter weniger als 40 Minuten, bevorzugter weniger als 30 Minuten, bevorzugter weniger als 20 Minuten im Temperaturbereich von 110-130 °C befindet, oder, wenn T1a über 120 °C liegt, das Erhitzen mit kontinuierlichem Erhitzen erfolgt, vorzugsweise mit einer Heizrate im Bereich von 0,1 bis 1000 K/h, bevorzugter im Bereich von 5 bis 500 K/h, bevorzugter im Bereich von 25 bis 300 K/h.

4. Das Verfahren zur Trennung einer Polymermischung nach einem der Ansprüche 1 bis 3, umfassend:
d) Abkühlen des in c) oder c.3) erhaltenen Lösungsmittels, das im Vergleich zu dem in a) bereitgestellten Lösungsmittel an gelöstem Polyester angereichert ist und optional mindestens einen Teil des Füllstoffs umfasst, auf eine Temperatur unter 170 °C, vorzugsweise unter 150 °C, bevorzugter unter 140 °C, bevorzugter unter 100 °C, wodurch ein ausgefällter Polyester und ein Lösungsmittel erhalten werden, das an gelöstem Polyester abgereichert ist und optional mindestens einen Teil des Füllstoffs umfasst;
e) optionales Abtrennen des in d) erhaltenen ausgefällten Polyesters vom Lösungsmittel, das an gelöstem Polyester abgereichert ist, wodurch ein ausgefällter Polyester und das Lösungsmittel erhalten werden, das an gelöstem Polyester abgereichert ist und optional mindestens einen Teil des Füllstoffs umfasst;
wobei das Verfahren zur Trennung einer Polymermischung vorzugsweise ferner umfasst:
f) optionales Waschen des in e) erhaltenen ausgefällten Polyesters;
g) optionales Trocknen des in e) erhaltenen ausgefällten Polyesters oder des in f) erhaltenen gewaschenen ausgefällten Polyesters.

5. Das Verfahren zur Trennung einer Polymermischung nach einem der Ansprüche 1 bis 4, umfassend das Rück-führen des in b.2) erhaltenen abgetrennten Lösungsmittels und/oder des in e) erhaltenen abgetrennten Lösungsmittels zumindest teilweise zu b) und/oder c), optional nach einem oder mehreren Aufarbeitungsschritt(en).

6. Das Verfahren zur Trennung einer Polymermischung nach einem der Ansprüche 1 bis 5, wobei T1 eine Temperatur im Bereich von 110 bis < 170 °C ist, vorzugsweise eine Temperatur im Bereich von 110 bis 165 °C, bevorzugter eine Temperatur im Bereich von 120 bis 150 °C und/oder
wobei T2 eine Temperatur im Bereich von > 170 °C bis 200 °C ist, vorzugsweise eine Temperatur im Bereich von 175 bis 190 °C, bevorzugter eine Temperatur im Bereich von 180 bis 190 °C.

7. Das Verfahren zur Trennung einer Polymermischung nach einem der Ansprüche 1 bis 6, wobei der Polyester gemäß i) ausgewählt ist aus der Gruppe bestehend aus einem Polymer auf Basis von 1,4-Butandiol und Terephthalsäure (Polybutylenterephthalat, PBT), einem Polymer auf Basis von 1,2-Ethandiol und Terephthalsäure (Polyethylenterephthalat, PET), einem Copolymer aus 1,4- Butandiol, Adipinsäure und Terephthalsäure (Polybutyladipateterephthalat, PBAT), einem Polymer aus 1,2-Ethandiol und 2,5-Furandicarbonsäure (Polyethylenfuranoat, PEF) und Mischungen aus zwei oder mehr dieser (Co)Polymere, wobei der Polyester gemäß i) vorzugsweise ein Polymer auf Basis von 1,4-Butandiol und Terephthalsäure (PBT) oder ein Polymer auf Basis von 1,2-Ethandiol und Terephthalsäure (PET) ist.

8. Das Verfahren zur Trennung einer Polymermischung nach einem der Ansprüche 1 bis 5, wobei das zweite Polymer vorzugsweise ausgewählt ist aus der Gruppe bestehend aus Polyurethan (PU), Polyethylenglykol (PEG), Polytetrahydrofuran (pTHF), Mischungen dieser Polymere und Copolymere dieser Polymere, wobei das zweite Polymer bevorzugter ein Copolymer aus PU und PEG und/oder pTHF ist, bevorzugter Spandex (Copolymer aus PU und PEG oder aus PU und pTHF).

9. Das Verfahren zur Trennung einer Polymermischung nach einem der Ansprüche 1 bis 8, wobei das dritte Polymer vorzugsweise ausgewählt ist aus der Gruppe bestehend aus Polyolefinen, vorzugsweise Polyethylen (PE) und Polypropylen (PP), Polyamid (PA), Naturpolymer, vorzugsweise Wolle, Baumwolle oder Viskose, Mischungen aus zwei oder mehr dieser Polymere und Copolymere aus zwei oder mehr dieser Polymere, wobei das dritte Polymer vorzugsweise ausgewählt ist aus PA, Wolle, Baumwolle, Viskose und Mischungen aus zwei oder mehr dieser Polymere.

10. Das Verfahren zur Trennung einer Polymermischung nach einem der Ansprüche 1 bis 9, wobei das Lösungsmittel, das gamma-Valerolacton umfasst, gamma-Valerolacton und ein oder mehrere Lösungsmittel umfasst, ausgewählt aus der Gruppe bestehend aus Wasser und organischen Lösungsmitteln mit einem log K_{ow} im Bereich von -1,6 bis +1,6, vorzugsweise ausgewählt aus der Gruppe bestehend aus Wasser, C5- bis C12-Alkan, aliphatischem C1- bis C10-Alkohol, C3- bis C10-Keton, C2- bis C10-cyclischem Keton, HO-[C1- bis C10-Alkyl-O-]ₙ-H, wobei n eine ganze Zahl im Bereich von 2 bis 1000 ist, C1- bis C10-Alkyl-O-C3- bis C10-Alkylether, C3- bis C10-cyclischem Ether, optional substituiert mit einer oder mehreren C1- bis C6-Alkylgruppe(n), C6- bis C10-aromatischem Kohlenwasserstoff, optional substituiert mit einer oder mehreren C1- bis C6-Alkylgruppe(n), C2- bis C10-aliphatischem Ester, C8- bis C11-aromatischem Ester, C5- bis C10-cyclischem Carbonsäureester (Lacton), C3- bis C12-Amid, vorzugsweise R¹R²N-C(=O)-R³, wobei R¹, R² unabhängig voneinander eine C1- bis C4-Alkylgruppe sind und R³ ausgewählt ist aus der Gruppe bestehend aus C1- bis C9-Alkylgruppe, C1-bis C10-Estergruppe und C1- bis C6-Ethergruppe, C3- bis C6-Lactam, optional substituiert mit einem oder mehreren Substituenten ausgewählt aus C1- bis C6-Alkylgruppe, C1- bis C6-Estergruppe und C1- bis C6-Ethergruppe, und C5-Imidazolidin, optional substituiert mit einer oder mehreren C1- bis C6-Alkylgruppe(n), C5- bis C7-Imidazolidinon, optional substituiert mit einer oder mehreren C1- bis C6-Alkylgruppe(n).

11. Ein Verfahren nach einem der Ansprüche 4 bis 10, umfassend
I) Bereitstellen eines Polyesters, der durch Verfahrensschritt d) und/oder e) und/oder f) und/oder g) gemäß Anspruch 4 erhalten wurde;
II) Herstellen eines Textils, einer Faser, einer Verpackung, eines Kunststoffs, eines Automobilteils, eines Elektronikteils aus dem in I) bereitgestellten Polyester.

12. Das Verfahren nach Anspruch 11, wobei in II) eine Lebensmittelverpackung, eine Getränkeverpackung, eine Bekleidung, Schuhwerk, ein Draht, ein Kabel hergestellt wird, wobei vorzugsweise für den Fall, dass der Polyester aus PBAT, PEF und PET, vorzugsweise PET, ausgewählt ist, eine Textilapplikation, eine Faseranwendung, eine Verpackungsanwendung, eine Kunststoffanwendung, bevorzugter eine Lebensmittelverpackung eine Getränkeverpackung, eine Bekleidung und Schuhwerk in II) hergestellt wird; wobei für den Fall, dass der Polyester PBT ist, eine Textilapplikation, eine Automobilanwendung oder eine Elektronikanwendung, bevorzugter ein Draht und/oder ein Kabel in II) hergestellt wird.

## Revendications

1. Un procédé de séparation d'un mélange de polymères, qui comprend
i) un polyester et
ii) un ou plusieurs composant(s) sélectionné(s) dans le groupe constitué d'un deuxième polymère, d'un troisième polymère et d'une charge, dans lequel le deuxième polymère et le troisième polymère sont différents l'un de l'autre et différents du polyester de i) ;
le procédé comprenant :
a) la fourniture du mélange de polymères et la fourniture d'un solvant comprenant de la gamma-valérolac-
tone ;
b) la mise en contact du mélange de polymères avec le solvant comprenant de la gamma-valérolactone à une température T1 de < 170 °C, obtenant ainsi un solvant enrichi en deuxième polymère dissous et un résidu du mélange de polymères appauvri en ledit deuxième polymère et comprenant le polyester, éventuellement le troisième polymère et éven-
tuellement la charge ;
et
c) éventuellement la mise en contact du résidu du mélange de polymères obtenu en b.2) avec un solvant comprenant de la gamma-valérolactone à une température T2 de > 170 °C, obtenant ainsi un solvant enrichi en polyester dissous par rapport au solvant fourni
en a) et comprenant éventuellement au moins une partie de la charge, et éventuellement un résidu du mélange de polymères appauvri en polyester et comprenant éventuellement le troisième polymère et éventuellement la charge ou une partie de la charge ;
dans lequel b) comprend :
b.1) la mise en contact du mélange de polymères avec le solvant comprenant de la gamma-valérolactone à une température T1 de < 170 °C, obtenant ainsi un solvant enrichi en deuxième polymère dissous et un résidu du mélange de polymères appauvri en ledit deuxième polymère et comprenant le polyester, éventuellement le troisième polymère et éventuellement la charge ;
b.2) la séparation du solvant enrichi en deuxième polymère dissous et du résidu du mélange de polymères obtenu en b.1), de préférence par un procédé de séparation physique, obtenant ainsi un solvant séparé enrichi en deuxième polymère dissous par rapport au solvant fourni en a) et le résidu du mélange de polymères appauvri en ledit deuxième polymère et comprenant le polyester.

2. Le procédé de séparation d'un mélange de polymères selon la revendication 1, dans lequel c) comprend :
c.1) la mise en contact du mélange de polymères fourni en a) ou du résidu du mélange de polymères obtenu en b) ou b.2) avec un solvant comprenant de la gamma-valérolactone et ayant une température T1a qui est ≤ T2 (T2 étant une température de > 170 °C), obtenant ainsi un mélange comprenant le mélange de polymères et le solvant ;
c.2) le chauffage du mélange obtenu en c.1) à une température T2 de > 170 °C avec un chauffage continu, dans lequel le chauffage de T1a à T2 est de préférence effectué avec une vitesse de chauffage dans la plage de 20 K/h à 1000 K/h, 25 K/h à 900 K/h, 30 K/h à 800 K/h, 40 K/h à 700 K/h, 60 K/h à 600 K/h, en maintenant de préférence T2, obtenant ainsi un solvant enrichi en polyester dissous par rapport au solvant fourni en
(a) et comprenant éventuellement au moins une partie de la charge ; et éventuellement un résidu du mélange de polymères appauvri en polyester et comprenant le troisième polymère et éventuellement la charge ou une partie de la charge ;
c.3) la séparation du solvant enrichi en polyester dissous obtenu en c.2) du résidu du mélange de polymères, dans lequel la séparation est de préférence effectuée par filtration à chaud, plus préférablement par filtration à chaud à une température T3 dans la plage de T2 moins 20 °C à T2 plus 20 °C (T3 = T2 ± 20 °C), plus préférablement à une température T3 dans la plage de T2 moins 10 °C à T2 plus 10 °C (T3 = T2 ± 10 °C) ;
dans lequel le procédé comprend de préférence en outre :
c.4) la mise en contact du résidu du mélange de polymères obtenu en c.3), s'il comprend une quantité résiduelle du polyester, avec un solvant comprenant de la gamma-valérolactone, de préférence à une température T3 telle que définie ci-dessus, suivie d'une filtration, obtenant ainsi un résidu du mélange de polymères davantage appauvri en polyester et comprenant le troisième polymère et éventuellement la charge ou une partie de la charge ; et un solvant contenant la quantité résiduelle du polyester.

3. Le procédé de séparation d'un mélange de polymères selon la revendication 2, dans lequel si T1a est inférieure à 120 °C, le chauffage est effectué avec un chauffage continu, de préférence avec une vitesse de chauffage dans la plage de 20 K/h à 1000 K/h, 25 K/h à 900 K/h, 30 K/h à 800 K/h, 40 K/h à 700 K/h, 60 K/h à 600 K/h, de préférence le chauffage est effectué de sorte que le mélange obtenu en c.1) se trouve dans la plage de température de 110-130 °C pendant moins de 60 minutes, de préférence pendant moins de 50 minutes, plus préférablement pendant moins de 40 minutes, plus préférablement pendant moins de 30 minutes, plus préférablement pendant moins de 20 minutes, ou, si T1a est supérieure à 120 °C, le chauffage est effectué avec un chauffage continu, de préférence avec une vitesse de chauffage dans la plage de 0,1 à 1000 K/h, plus préférablement dans la plage de 5 à 500 K/h, plus préférablement dans la plage de 25 à 300 K/h.

4. Le procédé de séparation d'un mélange de polymères selon l'une quelconque des revendications 1 à 3, comprenant :
d) le refroidissement du solvant obtenu en c) ou c.3), enrichi en polyester dissous par rapport au solvant fourni en a) et comprenant éventuellement au moins une partie de la charge, à une température inférieure à 170 °C, de préférence inférieure à 150 °C, plus préférablement inférieure à 140 °C, plus préférablement inférieure à 100 °C, obtenant ainsi un polyester précipité et un solvant appauvri en polyester dissous et comprenant éventuellement au moins une partie de la charge ;
e) éventuellement la séparation du polyester précipité obtenu en d) du solvant appauvri en polyester dissous, obtenant ainsi un polyester précipité et le solvant appauvri en polyester dissous et comprenant éventuellement au moins une partie de la charge ;
dans lequel de préférence le procédé de séparation d'un mélange de polymères comprend en outre :
f) éventuellement le lavage du polyester précipité obtenu en e) ;
g) éventuellement le séchage du polyester précipité obtenu en e) ou du polyester précipité lavé obtenu en f).

5. Le procédé de séparation d'un mélange de polymères selon l'une quelconque des revendications 1 à 4, comprenant le recyclage du solvant séparé obtenu en b.2) et/ou du solvant séparé obtenu en e) au moins partiellement vers b) et/ou c), éventuellement après une ou plusieurs étape(s) de traitement.

6. Le procédé de séparation d'un mélange de polymères selon l'une quelconque des revendications 1 à 5, dans lequel T1 est une température dans la plage de 110 à < 170 °C, de préférence une température dans la plage de 110 à 165 °C, plus préférablement une température dans la plage de 120 à 150 °C et/ou
dans lequel T2 est une température dans la plage de > 170 °C à 200 °C, de préférence une température dans la plage de 175 à 190 °C, plus préférablement une température dans la plage de 180 à 190 °C.

7. Le procédé de séparation d'un mélange de polymères selon l'une quelconque des revendications 1 à 6, dans lequel le polyester selon i) est sélectionné dans le groupe constitué d'un polymère à base de 1,4-butanediol et d'acide téréphtalique (polybutylène téréphtalate, PBT), d'un polymère à base de 1,2-éthanediol et d'acide téréphtalique (polyéthylène téréphtalate, PET), d'un copolymère de 1,4-butanediol, d'acide adipique et d'acide téréphtalique (polybutylène adipate-téréphtalate, PBAT), d'un polymère de 1,2-éthanediol et d'acide 2,5-furandicarboxylique (polyéthylène furanoate, PEF) et de mélanges de deux ou plusieurs de ces (co)polymères, de préférence le polyester selon i) est un polymère à base de 1,4-butanediol et d'acide téréphtalique (PBT) ou un polymère à base de 1,2-éthanediol et d'acide téréphtalique (PET).

8. Le procédé de séparation d'un mélange de polymères selon l'une quelconque des revendications 1 à 5, dans lequel le deuxième polymère est de préférence sélectionné dans le groupe constitué du polyuréthane (PU), du polyéthylène glycol (PEG), du polytétrahydrofurane (pTHF), de mélanges de ces polymères et de copolymères de ces polymères, dans lequel le deuxième polymère est plus préférablement un copolymère de PU et PEG et/ou pTHF, plus préférablement le spandex (copolymère de PU et PEG ou de PU et pTHF).

9. Le procédé de séparation d'un mélange de polymères selon l'une quelconque des revendications 1 à 8, dans lequel le troisième polymère est de préférence sélectionné dans le groupe constitué des polyoléfines, de préférence le polyéthylène (PE) et le polypropylène (PP), le polyamide (PA), le polymère naturel, de préférence la laine, le coton ou la viscose, les mélanges de deux ou plusieurs de ces polymères et les copolymères de deux ou plusieurs de ces polymères, dans lequel le troisième polymère est de préférence sélectionné parmi PA, la laine, le coton, la viscose et les mélanges de deux ou plusieurs de ces polymères.

10. Le procédé de séparation d'un mélange de polymères selon l'une quelconque des revendications 1 à 9, dans lequel le solvant comprenant de la gamma-valérolactone comprend de la gamma-valérolactone et un ou plusieurs solvant(s) sélectionné(s) dans le groupe constitué de l'eau et des solvants organiques ayant un log K_{ow} dans la plage de -1,6 à +1,6, de préférence sélectionnés dans le groupe constitué de l'eau, d'alcane C5 à C12, d'alcool aliphatique C1 à C10, de cétone C3 à C10, de cétone cyclique C2 à C10, de HO-[C1 à C10 alkyl-O-]ₙ-H, avec n étant un entier dans la plage de 2 à 1000, d'éther alkylique C1 à C10-O-C3 à C10, d'éther cyclique C3 à C10, éventuellement substitué avec un ou plusieurs groupe(s) alkyle C1 à C6, d'hydrocarbure aromatique C6 à C10, éventuellement substitué avec un ou plusieurs groupe(s) alkyle C1 à C6, d'ester aliphatique C2 à C10, d'ester aromatique C8 à C11, d'ester carboxylique cyclique C5 à C10 (lactone), d'amide C3 à C12, de préférence R¹R²N-C(=O)-R³, dans lequel R¹, R² sont indépendamment un groupe alkyle C1 à C4 et R³ est sé-lectionné dans le groupe constitué d'un groupe alkyle C1 à C9, d'un groupe ester C1 à C10 et d'un groupe éther C1 à C6, de lactame C3 à C6, éventuellement substitué avec un ou plusieurs substituant(s) sélectionné(s) parmi un groupe alkyle C1 à C6, un groupe ester C1 à C6 et un groupe éther C1 à C6, et d'imidazolidine C5, éventuellement substitué avec un ou plusieurs groupe(s) alkyle C1 à C6, d'imidazolidone C5 à C7, éventuellement substitué avec un ou plusieurs groupe(s) alkyle C1 à C6.

11. Un procédé selon l'une quelconque des revendications 4 à 10, comprenant
I) la fourniture d'un polyester obtenu par l'étape de procédé d) et/ou e) et/ou f) et/ou g) selon la revendication 4 ;
II) la préparation d'un textile, d'une fibre, d'un emballage, d'un plastique, d'une pièce automobile, d'une pièce électronique à partir du polyester fourni en I).

12. Le procédé selon la revendication 11, dans lequel un emballage alimentaire, un emballage pour boissons, un vêtement, une chaussure, un fil, un câble est préparé en II), dans lequel de préférence dans le cas où le polyester est sélectionné parmi PBAT, PEF et PET, de préférence PET, une application textile, une application fibre, une application emballage, une application plastique, plus préférablement un emballage alimentaire, un emballage pour boissons, un vêtement et une chaussure est préparé en II) ; dans lequel dans le cas où le polyester est PBT, une application textile, une application automobile ou une application électronique, plus préférablement un fil et/ou un câble est préparé en II).
